# EUROPÄISCHE PATENTSCHRIFT

(11) **EP 3 168 254 B1**
(45) Veröffentlichungstag und Bekanntmachung des Hinweises auf die Patenterteilung: **27.06.2018**
(21) Anmeldenummer: 15194064.0
(22) Anmeldetag: 11.11.2015
(51) Int. Cl.: C08G 71/04, C09J 175/16, C08L 81/02

(54) **VERFAHREN ZUR HERSTELLUNG ODER HÄRTUNG VON POLYMEREN MITTELS THIOL-EN POLYADDITIONSREAKTIONEN**
METHOD FOR THE PREPARATION OR HARDENING OF POLYMERS WITH THIOL-EN POLYADDITION REACTIONS
PROCEDE DE FABRICATION OU DE DURCISSEMENT DE POLYMERES AU MOYEN DE REACTIONS DE POLYADDITION DE THIOLS

(43) Veröffentlichungstag der Anmeldung: 17.05.2017
(73) Patentinhaber: Henkel AG & Co. KGaA, 40589 Düsseldorf (DE); Max-Planck-Gesellschaft zur Förderung der Wissenschaften e.V., 80539 München (DE)
(72) Erfinder: TADEN, Andreas, 40597 Düsseldorf (DE); KIRSCHBAUM, Stefan, 51379 Leverkusen (DE); LANDFESTER, Katharina, 55122 Mainz (DE)

(56) Entgegenhaltungen:
- US-A1- 2014 182 784
- ASKIM F. SENYURT ET AL: "Thermal and Mechanical Properties of Cross-Linked Photopolymers Based on Multifunctional Thiol-Urethane Ene Monomers", MACROMOLECULES, Bd. 40, Nr. 9, 1. Mai 2007 (2007-05-01), Seiten 3174-3182, XP055267353, US ISSN: 0024-9297, DOI: 10.1021/ma0626463
- CHARLES&EMSP14;E. HOYLE ET AL: "Thiol-Ene Click Chemistry", ANGEWANDTE CHEMIE INTERNATIONAL EDITION, Bd. 49, Nr. 9, 22. Februar 2010 (2010-02-22), Seiten 1540-1573, XP055151318, ISSN: 1433-7851, DOI: 10.1002/anie.200903924

## Beschreibung

Die vorliegende Erfindung betrifft ein Verfahren zur Herstellung von Polyhydroxyurethanen (PHU) aus Alkenyletherpolyolen bzw. Präpolymeren, die von solchen Alkenyletherpolyolen abgeleitete Monomereinheiten enthalten, und Polythiolverbindungen sowie ein Verfahren zur Vernetzung von Alkenylethergruppen-haltigen Verbindungen mit Polythiolverbindungen. Des Weiteren richtet sich die Erfindung auf die Polymere und vernetzten Polymere, die mittels des erfindungsgemäßen Verfahrens erhältlich sind.

Photopolymere sind Gegenstand wachsenden Interesses, da sie sich in einer Vielzahl von wichtigen Technologiefeldern, wie beispielsweise Stereolithographie, Nanoprägelithographie, 3D Druck, einsetzen lassen und energiesparende LEDs, geeignet um entsprechend angepasste Photopolymersysteme zur Reaktion zu bringen, weithin verfügbar sind. Photopolymerisation im Allgemeinen erfordert geringe Energiemengen und wird im Bereich der Klebstoffe und Beschichtungen mehr und mehr als Ersatz für umweltschädliche Lösungsmittel-basierte Produktformulierungen und Prozesse eingesetzt. Es besteht daher generell Interesse daran, existierende Herstellungs- und Härtungsverfahren durch Alternativen, die auf Photopolymerisation basieren, zu ersetzen.

Askim F. Senyurt et al in "Thermal and Mechanical Properties of Cross-linked Photoploymers Based on Multifunctional Thiol-Urethane Ene Momoners", Macromolecules 2007, 40, 3174, 3182, beschreiben Multien-Monomer auf Basis von Urethanen, die mit trifunktionalen Thiolmonomeren photopolymerisiert wurden um ein hoch vernetztes Thiol-Ene-Netzwerk auszubilden.

US 2014/0182784 betrifft eine Zusammensetzung, die ein Reaktionsprodukt von 1) ein oder mehrere Verbindungen, mit wenigstens einer zyklischen Carbonatgruppe, wobei die Carbonatgruppe ein oder mehrere funktionelle Gruppen mit einer oder mehrerer Kohlenstoff-Kohlenstoff-Doppelbindungen aufweist, 2) ein oder mehrere Verbindungen mit zwei oder mehr Thiolgruppen, und 3) ein oder mehrere Verbindungen mit zwei oder mehr Amingruppen, wobei das Reaktionsprodukt ein vernetztes Poly(hydroxylurethan) ist.

Charles E. Hoyle et al beschreiben in Angew. Chem. Int. Ed. 2010, 49, 1540-1573 den Reaktionsmechanismus von Thiol-Ene-Click-Reaktionen und dessen Auswirkung auf unterschiedliche Synthesemethoden, Biofunktionalisierung, Oberflächen- und Polymermodifikation und Polymerisation.

Polyhydroxyurethane, d.h. Polyurethane mit mehreren freien Hydroxygruppen pro Molekül, werden derzeit hauptsächlich über die Aminolyse von zyklischen Carbonaten hergestellt. Obwohl dieser Syntheseweg umweltfreundlich ist, da auf den Einsatz von Isocyanaten und Phosgen verzichtet werden kann, lassen sich sofern thermoplastische Polymersysteme gewünscht sind (d.h. unvernetzte und weitgehend unverzweigte, lineare Polymerketten) hierüber nur Polyurethane mit vergleichsweise niedrigen Molekulargewichten darstellen.

Es besteht folglich Bedarf an einem gegenüber dem Stand der Technik verbesserten Verfahren zur Herstellung von Polyhydroxyurethanen (PHUs), das die Darstellung von höhermolekularen Polymeren ermöglicht, aber dabei nach wie vor insoweit umweltfreundlich ist, als dass auf den Einsatz von Isocyanaten und Phosgen verzichtet werden kann.

Es wurde nun gefunden, dass sich PHUs und auch andere Hydroxylgruppen-haltige Polymere alternativ über eine Thiol-en Click Polyaddition unter Verwendung von Alkenyletherpolyolen darstellen lassen. Generell sind Alkenylether-funktionalisierte Polyole hervorragende Vorstufen für zahlreiche UV-initiierte kationische Polykondensations- und Polyadditionsreaktionen und ermöglichen je nach Struktur und Funktionalisierungsgrad eine gute Kontrolle über die Quervernetzungsdichte in den resultierenden polymeren Systemen. Alkenyletherpolyole können ganz allgemein als Ausgangsstoffe für die Synthese von Oligomeren und Polymeren dienen, die über die Reaktion der OH-Gruppen, wie beispielsweise Polyadditionsverfahren oder Polykondensationsreaktionen, zugänglich sind. Derart erhältliche Polymere schließen beispielsweise Polyester, Polyether, Polyurethane und Polyharnstoffe ein. Die Alkenyletherfunktionalitäten ermöglichen weitere Funktionalisierungs-, Quervernetzungs- und Polymerisationsreaktionen, beispielsweise kationische Polymerisation oder auch radikalische Copolymerisation, der Polyole und ihrer Reaktionsprodukte.

Ein erster Gegenstand der vorliegenden Erfindung ist daher ein Verfahren zur Herstellung eines eines Polyhydroxyurethanpolymers, umfassend Umsetzen mindestens eines Alkenyletherpolyols enthaltend mindestens eine 1-Alkenylethergruppe, und mindestens zwei Hydroxylgruppen (-OH), oder eines Präpolymers, das mindestens ein solches Alkenyletherpolyol als Monomereinheit enthält, mit einer Verbindung, die mindestens zwei Thiolgruppen (-SH) enthält.

Des Weiteren richtet sich die Erfindung auf ein Verfahren zum Vernetzen einer Verbindung, die mindestens eine 1-Alkenylethergruppe enthält, vorzugsweise eines Alkenyletherpolyols enthaltend mindestens 1-Alkenylethergruppe, und mindestens zwei Hydroxylgruppen (-OH), oder eines Polymers, das mindestens ein solches Alkenyletherpolyol als Monomereinheit enthält, insbesondere eines Polyurethans oder Polyesters, umfassend Umsetzen der Verbindung mit einer Verbindung, die mindestens zwei Thiolgruppen enthält.

Die vorliegende Erfindung richtet sich darüber hinaus auf Polyhydroxyurethane (PUHs), die erhältlich sind nach einem Verfahren gemäß der vorliegenden Erfindung.

"Alkenyletherpolyol", wie hierin verwendet, bezeichnet Verbindungen, die mindestens eine Gruppe der Formel -O-Alkenyl, die an ein Kohlenstoffatom gebunden ist, und mindestens zwei Hydroxylgruppen (-OH) enthalten. Es ist bevorzugt, dass das Alkenyletherpolyol einen, optional Urethangruppen-haltigen, organischen Rest umfasst, an den sowohl die Alkenylethergruppe als auch die Hydroxygruppen gebunden sind, d.h. die Hydroxygruppen nicht an die Alkenylgruppe gebunden sind. Die Alkenylethergruppe ist eine 1-Alkenylethergruppe, d.h. die C-C-Doppelbindung benachbart zu dem Sauerstoffatom liegt. Ganz besonders bevorzugt sind Vinylethergruppen, d.h. Gruppen der Formel -O-CH=CH₂.

Der Begriff "Urethangruppe", wie hierin verwendet, bezeichnet Gruppen der Formel -O-C(O)-NH- bzw. -NH-C(O)-O-.

Der Begriff "Alkyl", wie hierin verwendet, bezeichnet einen linearen oder verzweigten, unsubstituierten oder substituierten gesättigten Kohlenwasserstoffrest, insbesondere Reste der Formel CₙH₂ₙ₊₁. Beispiele für Alkylreste schließen ein, ohne darauf beschränkt zu sein, Methyl, Ethyl, n-Propyl, iso-Propyl, n-Butyl, 2-Butyl, tert-Butyl, n-Pentyl, n-Hexyl und ähnliche. "Heteroalkyl", wie hierin verwendet, bezeichnet Alkylreste, in denen mindestens ein Kohlenstoffatom durch ein Heteroatom, wie insbesondere Sauerstoff, Stickstoff oder Schwefel, ersetzt ist. Beispiele schließen, ohne Beschränkung, Ether und Polyether ein, beispielsweise Diethylether oder Polyethylenoxid.

Der Begriff "Alkenyl", wie hierin verwendet, bezeichnet einen linearen oder verzweigten, unsubstituierten oder substituierten Kohlenwasserstoffrest, der mindestens eine C-C Doppelbindung enthält.

"Substituiert", wie hierin insbesondere im Zusammenhang mit Alkyl- und Heteroalkylgruppen verwendet, bezieht sich auf Verbindungen, in denen ein oder mehrere Kohlenstoff- und/oder Wasserstoffatome durch andere Atome oder Gruppen ersetzt sind. Geeignete Substituenten schließen ein, ohne darauf beschränkt zu sein, -OH, -NH₂, -NO₂, -CN, -OCN, -SCN, -NCO, -NCS, - SH, -SO₃H, -SO₂H, -COOH, -CHO und ähnliche.

Der Begriff "organischer Rest", wie hierin verwendet, bezieht sich auf jeden organischen Rest, der Kohlenstoffatome enthält. Organische Reste können insbesondere von Kohlenwasserstoffen abgeleitet sein, wobei beliebige Kohlenstoff- und Wasserstoffatome durch andere Atome oder Gruppen ersetzt sein können. Organische Reste im Sinne der Erfindung enthalten in verschiedenen Ausführungsformen 1 bis 1000 Kohlenstoffatome.

"Epoxid", wie hierin verwendet, bezeichnet Verbindungen, die eine Epoxidgruppe enthalten.

"Cyclisches Carbonat", wie hierin verwendet, bezeichnet ringförmige Verbindungen, die als Ringbestandteil die Gruppe -O-C(=O)-O- enthalten.

Der Begriff "Alkohol" bezeichnet eine organische Verbindung, die mindestens eine Hydroxylgruppe (-OH) enthält.

Der Begriff "Amin" bezeichnet eine organische Verbindung, die mindestens eine primäre oder sekundäre Aminogruppe (-NH₂, -NHR) umfasst.

Der Begriff "Thiol" oder "Mercaptan" bezeichnet eine organische Verbindung, die mindestens eine Thiolgruppe (-SH) enthält.

Der Begriff "Carbonsäure" bezeichnet eine Verbindung, die mindestens eine Carboxylgruppe (-C(=O)OH) enthält.

Der Begriff "Derivat", wie hierin verwendet, bezeichnet eine chemische Verbindung, die gegenüber einer Referenzverbindung durch eine oder mehrerer chemischer Reaktionen verändert ist. Im Zusammenhang mit den funktionellen Gruppen -OH, -COOH, -SH und -NH₂ bzw. den Verbindungsklassen der Alkohole, Carbonsäuren, Thiole und Amine umfasst der Begriff "Derivat" insbesondere die korrespondierenden ionischen Gruppen/Verbindungen und deren Salze, d.h. Alkoholate, Carboxylate, Thiolate und Verbindungen, die quaternäre Stickstoffatome enthalten. Im Zusammenhang mit den cyclischen Carbonaten, kann der Begriff Derivat auch die unten genauer beschriebenen Thioderivate der Carbonate umfassen, d.h. Verbindungen in den ein, zwei oder alle drei Sauerstoffatome der Gruppierung -O-C(=O)-O- durch Schwefelatome ersetzt sind.

"Mindestens", wie hierin im Zusammenhang mit einem Zahlenwert verwendet, bezieht sich auf genau diesen Zahlenwert oder mehr. "Mindestens ein" bedeutet somit 1 oder mehr, d.h. beispielsweise 2, 3, 4, 5, 6, 7, 8, 9, 10 oder mehr. Im Zusammenhang mit einer Art von Verbindung bezieht sich der Begriff nicht auf die absolute Anzahl der Moleküle, sondern vielmehr auf die Anzahl der Arten von Stoffen, die unter den jeweiligen Oberbegriff fallen. "Mindestens ein Epoxid" bedeutet somit beispielsweise, dass mindestens eine Art von Epoxid, aber auch mehrere verschiedene Epoxide enthalten sein können.

Der Begriff "härtbar", wie hierin verwendet, bezeichnet eine Veränderung des Zustandes und/oder der Struktur in einem Material durch chemische Reaktion, die für gewöhnlich, aber nicht zwingend, durch mindestens eine Variable, wie die Zeit, Temperatur, Feuchtigkeit, Strahlung, Anwesenheit und Quantität eines härtungs-vermittelnden Katalysators oder Beschleunigers und dergleichen induziert wird. Der Begriff bezieht sich sowohl auf das komplette wie auch partielle Aushärten des Materials.

"Strahlen-härtbar" oder "strahlen-vernetzbar", bezeichnet somit Verbindungen, die bei Exposition gegenüber Strahlung chemisch reagieren und neue Bindungen (intra- oder intermolekular) ausbilden.

"Strahlung", wie hierin verwendet, bezieht sich auf elektromagnetische Strahlung, insbesondere UV-Licht und sichtbares Licht, sowie Elektronenstrahlen. Vorzugsweise findet die Härtung durch Exposition gegenüber Licht, beispielsweise UV-Licht oder sichtbarem Licht, statt.

Der Begriff "zweiwertig" oder "2-wertig", wie hierin im Zusammenhang mit Resten oder Gruppen verwendet, bezeichnet einen Rest oder eine Gruppe, die mindestens zwei Anknüpfungsstellen hat, die eine Verbindung zu weiteren Molekülteilen herstellen. Ein zweiwertiger Alkylrest bedeutet somit im Sinne der vorliegenden Erfindung einen Rest der Formel -Alkyl-. Ein solcher zweiwertiger Alkylrest wird hierin auch als Alkylenylrest bezeichnet. "Mehrwertig" bedeutet dementsprechend, dass ein Rest oder einer Gruppe mehr als einen Anknüpfungspunkt besitzt. Beispielsweise kann ein solcher Rest auch drei-, vier-, fünf- oder sechswertig sein. "Mindestens 2-wertig" bedeutet somit 2- oder höherwertig.

Der Begriff "Poly-" bezieht sich auf eine sich wiederholende Einheit einer diesem Präfix nachgestellten (funktionellen) Gruppe oder strukturellen Einheit. So bezeichnet ein Polyol eine Verbindung mit mindestens 2 Hydroxygruppen, ein Polyalkylenglykol bezeichnet ein Polymer aus Alkylenglykol-Monome reinheiten.

"Polyisocyanat", wie hierin verwendet, bezieht sich auf organische Verbindungen, die mehr als eine Isocyanatgruppe (-NCO) enthalten.

Die im vorliegenden Text angegebenen Molekulargewichte beziehen sich, soweit nicht anders angegeben, auf das Zahlenmittel des Molekulargewichts (Mₙ). Das zahlenmittlere Molekulargewicht kann basierend auf einer Endgruppenanalyse (OH Zahl gemäß DIN 53240; NCO Gehalt wie bestimmt durch Titration nach Spiegelberger gemäß EN ISO 11909) oder mittels Gelpermeationschromatographie gemäß DIN 55672-1:2007-08 mit THF als Eluent bestimmt werden. Wenn nicht anders angegeben, sind alle angegebenen Molekulargewichte solche, die mittels Endgruppenanalyse bestimmt wurden.

Bei den Alkenylethern kann es sich um aliphatische Verbindungen handeln, welche außer der oder den Alkenylethergruppe(n) mindestens eine andere funktionelle Gruppen enthalten, die reaktiv gegenüber Epoxy bzw. Cyclocarbonatgruppen ist, darunter -OH, -COOH, -SH, -NH₂ und deren Derivate. Die funktionellen Gruppen greifen nucleophil am Ringkohlenstoff des Epoxidrings oder am Carbonyl-Kohlenstoffatom des Cyclocarbonats an, wobei sich der Ring öffnet und eine Hydroxylgruppe entsteht. In Abhängigkeit der reaktiven, nucleophilen Gruppe wird dabei, eine O-C-, N-C, S-C, oder O-/N-/S-C(=O)O-Bindung geknüpft.

Die Herstellung des Alkenyletherpolyols kann beispielsweise über zwei alternative Routen A) und B) realisiert werden.

Bei Route A) wird ein Alkenylether, der mindestens eine 1-Alkenylethergruppe und mindestens eine funktionelle Gruppe ausgewählt aus -OH, -COOH, -SH, -NH₂ und deren Derivaten enthält, mit (i) einem Epoxid oder (ii) einem cyclischen Carbonat oder Derivat davon umgesetzt.

Bei Route B) wird ein Alkenylether, der mindestens eine 1-Alkenylethergruppe und mindestens eine funktionelle Gruppe ausgewählt aus (i) Epoxidgruppen und (ii) cyclischen Carbonatgruppen oder Derivaten davon enthält, mit einem Alkohol, Thiol, einer Carbonsäure oder einem Amin oder Derivaten der vorgenannten umgesetzt. Die vorstehend genannten Alkohole, Thiole, Carbonsäuren und Amine können dabei mono- oder polyfunktionell sein.

Unabhängig von der Route entstehen die Alkenyletherpolyole durch Reaktion der Hydroxy-, Thiol-, Carboxyl- oder Aminogruppen mit einer Epoxid- oder cyclischen Carbonatgruppe unter Ringöffnung.

In allen Ausführungsformen werden die Reaktionspartner derart ausgewählt, dass das Reaktionsprodukt, d.h. das erhaltene Alkenyletherpolyol mindestens zwei Hydroxylgruppen trägt.

Beispielsweise wird das Alkenyletherpolyol hergestellt durch Umsetzen eines Alkenylethers, enthaltend mindestens eine 1-Alkenylethergruppe und mindestens eine funktionelle Gruppe ausgewählt aus -OH, -COOH, -SH, -NH₂ und deren Derivaten, mit (i) einem Epoxid oder (ii) einem cyclischen Carbonat oder Derivat davon, wobei das derart hergestellte Alkenyletherpolyol ein Alkenyletherpolyol der Formel (I) ist

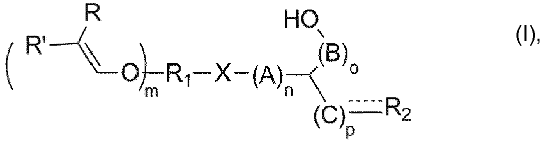

In den Verbindungen der Formel (I) ist
R₁ ein mindestens 2-wertiger organischer Rest, optional mit 1 bis 1000 Kohlenstoffatomen, insbesondere ein mindestens 2-wertiges lineares oder verzweigtes, substituiertes oder unsubstituiertes Alkyl mit 1 bis 50, vorzugsweise 1 bis 20 Kohlenstoffatomen, oder ein mindestens 2-wertiges lineares oder verzweigtes, substituiertes oder unsubstituiertes Heteroalkyl mit 1 bis 50, vorzugsweise 1 bis 20 Kohlenstoffatomen, und mindestens einem Sauerstoff- oder Stickstoffatom, R₂ ein organischer Rest, optional mit mindestens einer -OH Gruppe und/oder 1 bis 1000 Kohlenstoffatomen, insbesondere ein (optional 2- oder mehrwertiges) lineares oder verzweigtes, substituiertes oder unsubstituiertes Alkyl mit 1 bis 50, vorzugsweise 1 bis 20 Kohlenstoffatomen oder ein (optional 2- oder mehrwertiges) lineares oder verzweigtes, substituiertes oder unsubstituiertes Heteroalkyl mit 1 bis 50, vorzugsweise 1 bis 20 Kohlenstoffatomen und mindestens einem Sauerstoff- oder Stickstoffatom. R₂ kann aber auch ein hochmolekularer Rest, wie beispielweise ein Polyalkylenglykolrest sein. Ein solcher (Poly)alkylenglykolrest kann beispielsweise die Formel -O-[CHRₐCH₂O]_{b}-R_{b} aufweisen, wobei Rₐ H oder ein C₁₋₄-Alkylrest, R_{b} -H oder ein organischer Rest und b 1 bis 100 ist.

In den Verbindungen der Formel (I) ist X O, S, C(=O)O, OC(=O)O, C(=O)OC(=O)O, NRₓ, NRₓC(=O)O, NRₓC(=O)NRₓ oder OC(=O)NRₓ. In bevorzugten Ausführungsformen ist X O, OC(=O)O, NRₓ oder NRₓC(=O)O.

Jedes R und R' ist unabhängig ausgewählt aus H, C₁₋₂₀ Alkyl und C₂₋₂₀ Alkenyl, wobei insbesondere eines von R und R' H und das andere C₁₋₄ Alkyl oder beide H sind. Besonders bevorzugt ist R H und R' ist H oder -CH₃.

Jedes A, B und C ist unabhängig ausgewählt aus kohlenstoffhaltigen Gruppen der Formel CR"R"', wobei R" und R'" unabhängig ausgewählt sind aus H, einer funktionellen Gruppe, wie beispielsweise -OH, -NH₂, -NO₂, -CN, -OCN, -SCN, -NCO, -NCS, -SH, -SO₃H oder -SO₂H, und einem organischen Rest. Insbesondere sind R" und R'" unabhängig H oder C₁₋₂₀ Alkyl. R" und R'" können aber auch gemeinsam oder zusammen mit dem Kohlenstoffatom an das sie gebunden sind einen organischen Rest, einschließlich zyklischer Reste, oder eine funktionelle Gruppe bilden. Beispiele für solche Reste sind =CH₂, =CH-Alkyl oder =C(Alkyl)₂, =O, =S, -(CH₂)ₐₐ- mit aa = 3 bis 5 bzw. Derivate davon, in denen eine oder mehrere Methylengruppen durch Heteroatome wie N, O oder S ersetzt sind. Zwei von R" und R'", die an benachbarte Kohlenstoffatome gebunden sind, können aber auch zusammen eine Bindung bilden. Dadurch wird zwischen den beiden benachbarten Kohlenstoffatome eine Doppelbindung ausgebildet (d.h. -C(R")=C(R")-).
- - - - - - -: steht für eine Einfach- oder Doppelbindung. Wenn es für eine Doppelbindung steht, trägt das Kohlenstoffatom, das an R₂ gebunden ist nur einen Substituenten R" oder R'''.

In den Verbindungen der Formel (I) ist m eine ganze Zahl von 1 bis 10, vorzugsweise 1 oder 2, besonders bevorzugt 1. D.h. die Verbindungen tragen vorzugsweise nur eine oder 2 Alkenylethergruppe(n).

n, p und o sind jeweils 0 oder eine ganze Zahl von 1 bis 10. Dabei erfüllen sie die Bedingung n+p+o=1 oder mehr, insbesondere 1 oder 2. Es ist besonders bevorzugt, dass n oder o 1 ist und die anderen 0 sind. Alternativ ist besonders bevorzugt, dass n oder o 2 ist und die anderen 0 sind. Es ist ferner bevorzugt, dass p 0 ist und eines von n und o 1 oder 2 ist und das andere 0 ist. Ebenfalls bevorzugt sind Ausführungsformen, in denen n und o 1 sind und p 0 ist.

Rₓ ist H, ein organischer Rest oder

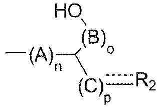

Damit das Alkenyletherpolyol mindestens zwei Hydroxylgruppen aufweist, erfüllt die Verbindung der Formel (I) ferner die Bedingung, dass wenn Rₓ nicht 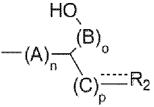 ist,
R₂ mindestens einen Substituenten aufweist, der ausgewählt ist aus -OH und

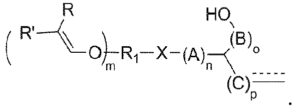

Die zweite Hydroxylgruppe der Verbindung der Formel (I) ist daher entweder als Substituent in dem organischen Rest R₂ enthalten oder X enthält einen weiteren Rest der Formel

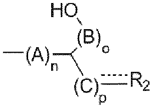

In verschiedenen Ausführungsformen enthält das Alkenyletherpolyol der Formel (I) mindestens eine Urethangruppe. Durch die Umsetzung mit Polythiolen gemäß den hierin beschriebenen Verfahren lassen sich dann Polyhydroxyurethane (PHUs) darstellen.

In verschiedenen Ausführungsformen des beschriebenen Herstellungsverfahren zur Darstellung eines Alkenyletherpolyols ist der Alkenylether, der mindestens eine 1-Alkenylethergruppe und mindestens eine funktionelle Gruppe ausgewählt aus -OH, -COOH, -SH, -NH₂ und deren Derivaten enthält, ein Alkenylether der Formel (II).

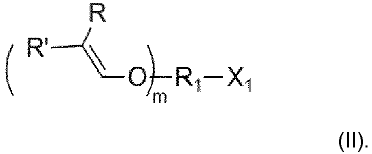

Ein solcher Alkenylether kann beispielsweise verwendet werden, um ein Alkenyletherpolyol der Formel (I) zu synthetisieren, indem er mit einem Epoxid oder einem cyclischen Carbonat umgesetzt wird.

In den Verbindungen der Formel (II) sind R₁, R, R' und m wie oben für Formel (I) definiert. Insbesondere sind die oben für die Verbindungen der Formel (I) beschriebenen bevorzugten Ausführungsformen von R₁, R, R' und m in gleicher Weise auf die Verbindungen der Formel (II) übertragbar.

In den Verbindungen der Formel (II) ist
X₁ eine funktionelle Gruppe ausgewählt aus -OH, -COOH, -SH, -NHR_{y} und deren Derivaten, und R_{y} ist H oder ein organischer Rest, vorzugsweise H.

Die Derivate der funktionellen Gruppen -OH, -COOH, -SH, -NHR_{y} sind vorzugsweise die bereits oben im Zusammenhang mit der Definition des Begriffs beschriebenen ionischen Varianten, die sich durch Entfernen bzw. Bindung eines Protons ergeben, hierbei insbesondere die Alkoholate, Thiolate und Carboxylate, ganz besonders bevorzugt die Alkoholate.

Besonders bevorzugt ist X₁-OH oder -O⁻ oder -NH₂.

Eine Ausführungsform des beschriebenen Verfahrens zur Herstellung der Alkenyletherpolyole ist weiterhin dadurch gekennzeichnet, dass in dem Alkenylether der Formel (II) m 1 ist, X₁ -OH oder - NH₂, vorzugsweise -OH, ist, R₁ ein zweiwertiger, linearer oder verzweigter C₁₋₁₀ Alkylrest (Alkylenylrest), insbesondere Ethylenyl, Propylenyl, Butylenyl, Pentylenyl oder Hexylenyl, ist, und eines von R und R' H und das andere H oder -CH₃ ist.

Bei den Alkenylethern, die im Rahmen der beschriebenen Verfahren zur Herstellung der Alkenyletherpolyole eingesetzt werden können, insbesondere denen der Formel (II), kann es sich z. B. um Reaktionsprodukte von verschiedenen optional substituierten Alkanolen (Monoalkohole und Polyole) mit Acetylen handeln. Konkrete Beispiele schließen ein, ohne darauf beschränkt zu sein, 4-Hydroxybutylvinylether (HBVE) und 3-Aminopropylvinylether (APVE).

Eine weitere Ausführungsform des beschriebenen Verfahrens zur Herstellung der Alkenyletherpolyole ist dadurch gekennzeichnet, dass das Epoxid, das mit dem Alkenylether umgesetzt wird, ein Epoxid der Formel (III) oder (IIIa) ist

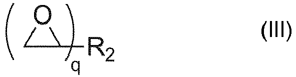

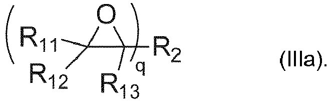

In Verbindungen der Formel (III) und (IIIa) ist R₂ wie oben für Formel (I) definiert.

R₁₁, R₁₂ und R₁₃ sind unabhängig voneinander H oder ein organischer Rest, optional mit mindestens einer -OH Gruppe, insbesondere ein lineares oder verzweigtes, substituiertes oder unsubstituiertes Alkyl mit 1 bis 20 Kohlenstoffatomen oder lineares oder verzweigtes, substituiertes oder unsubstituiertes Heteroalkyl mit 1 bis 20 Kohlenstoffatomen und mindestens einem Sauerstoff- oder Stickstoffatom.

q ist eine ganze Zahl von 1 bis 10, vorzugsweise 1 oder 2.

Epoxyverbindungen, die in den Verfahren zur Herstellung von Alkenyletherpolyolen Anwendung finden können, sind demnach vorzugsweise lineare oder verzweigte, substituierte oder unsubstituierte Alkane mit einer Kohlenstoffatomanzahl von 1 bis 1000, vorzugsweise 1 bis 50 oder 1 bis 20, die mindestens eine Epoxygruppe tragen. Optional können diese Epoxyverbindungen zusätzlich noch eine oder mehrere Hydroxygruppen tragen, wodurch der Hydroxyl-Funktionalisierungsgrad des aus der Reaktion eines gegenüber Epoxiden reaktiven Alkenylethers, wie zuvor beschrieben, mit einem Epoxid entstandenen Alkenyletherpolyols hoch ist. Dadurch wiederum kann in späteren Polymerisierungsreaktionen die Quervernetzungsdichte des gewünschten Polymers kontrolliert und gesteuert werden.

Bei der Reaktion einer gegenüber Epoxiden reaktiven Alkenyletherverbindung (Alkenylether mit mindestens einer funktionellen Gruppe ausgewählt aus -OH, -COOH, -SH, -NH₂ und deren Derivaten) entsteht unter Ringöffnung des Epoxids ein Alkohol. Aus der Reaktionen eines ersten Alkohols oder einer in diesem Kontext chemisch verwandten Verbindung (Amin, Thiol, Carbonsäure, etc.) mit einem Epoxid wird somit die alkoholische Gruppe im Zuge der Bindungsknüpfung "regeneriert".

In verschiedenen Ausführungsformen kann die Epoxyverbindung mehr als eine Epoxygruppe tragen. Dies ermöglicht die Umsetzung einer solchen Epoxyverbindung mit mehr als einer gegenüber Epoxiden reaktiven Alkenyletherverbindung, beispielsweise einem Aminoalkenylether oder Hydroxyalkenylether.

In besonders bevorzugten Ausführungsformen ist das Epoxid ein Epoxid der Formel (III), wobei q 1 oder 2 ist, und wenn q 2 ist, R₂-CH₂-O-C₁₋₁₀-Alkylenyl-O-CH₂- ist, und wenn q 1 ist, R₂ -CH₂-O-C₁₋₁₀-Alkyl ist.

Beispiele für Epoxyverbindugen, die in den Herstellungsverfahren der Alkenyletherpolyole zum Einsatz kommen können, sind insbesonders Glycidylether, wie z.B., ohne Einschränkung, 1,4-Butandioldiglycidylether (BDDGE), Polyalkylenglycoldiglycidylether, Trimethylolpropanetriglycidylether, Bisphenol-A-diglycidylether (BADGE), Novolak basierte Epoxide und epoxidierte Polybutadiene oder Fettsäureester.

In verschiedenen Ausführungsformen, ist das Alkenyletherpolyol der Formel (I) durch Umsetzen eines Alkenylethers der Formel (II) mit einem Epoxid der Formel (III) oder (IIIa) darstellbar.

Anstelle eines Epoxids kann es sich bei den Verbindungen, die mit den gegenüber Epoxiden reaktiven Verbindungen (Alkenyletherverbindungen) umgesetzt werden, auch um cyclische Carbonate oder deren Derivate handeln. Cyclische Carbonatverbindungen unterliegen einer ähnlich den Epoxiden gearteten Reaktivität gegenüber den als Reaktionspartner dienenden Verbindungen, die sowohl Epoxide als auch cyclische Carbonatverbindungen unter Ringöffnung und "Regeneration" einer alkoholischen funktionellen Gruppe nucleophil am, im Falle eines Epoxids, Methylen des Epoxidrings, oder, im Falle eines cyclischen Carbonats, Carbonyl-Kohlenstoffatom addieren, wodurch, in Abhängigkeit des reaktiven, nucleophilen Restes, eine O-C-, N-C, S-C, oder O-/N-/S-C(=O)O-Bindung geknüpft wird.

Die cyclischen Carbonate, welche im beschriebenen Verfahren zur Herstellung der Alkenyletherpolyole mit einem Alkenylether, insbesondere einem Alkenylether der Formel (II), umgesetzt werden können, sind in bevorzugten Ausführungsformen Cyclocarbonate der Formel (IV) oder (IVa)

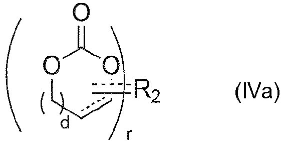

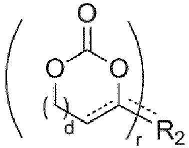

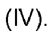

In Verbindungen der Formel (IV) und (IVa) ist R₂ wie für Formel (I), (III) und (IIIa) definiert. Insbesondere ist R₂ ein C₁₋₁₀ Hydroxyalkyl. In weiteren Ausführungsformen kann R₂ =CH₂ sein.

- - - - - - ist eine Einfach- oder Doppelbindung, vorzugsweise eine Einfachbindung. Es ist selbstverständlich, dass wenn der Ring eine Doppelbindung enthält, R₂ nicht über eine exo-Doppelbindung sondern über eine Einfachbindung gebunden ist und umgekehrt.

d ist 0, 1, 2, 3, 4 oder 5, vorzugsweise 0 oder 1, besonders bevorzugt 0, und r ist eine ganze Zahl von 1 bis 10, vorzugsweise 1 oder 2, ganz besonders bevorzugt 1.

Wenn d 1 ist, d.h. das Cyclocarbonat ein 1,3-Dioxan-2-on ist, kann R₂ in der 4- oder 5-Position sein, ist aber vorzugsweise in der 5-Position.

Beispielhafte cyclische Carbonate schließen ein, ohne darauf beschränkt zu sein, 1,3-Dioxolan-2-on, 4,5-Dehydro-1,3-Dioxolan-2-on, 4-Methylen-1,3-Dioxolan-2-on, und 1,3-Dioxan-2-on, die in der 4- bzw. 5-Position mit R₂ substituiert sind.

In verschiedenen Ausführungsformen der beschriebenen Verfahren zur Herstellung der Alkenyletherpolyole werden cyclische Carbonat eingesetzt, die Derivate der Carbonate der Formeln (IV) und (IVa) sind. Beispielhafte Derivate schließen solche ein, die an den Ring-Methylengruppen, insbesondere denen die nicht den R₂ Rest tragen, substituiert sind, beispielsweise mit organischen Resten, insbesondere linearen oder verzweigten, substituierten oder unsubstituierten Alkyl- oder Alkenylresten mit bis zu 20 Kohlenstoffatomen, insbesondere =CH₂ und -CH=CH₂, oder linearen oder verzweigten, substituierten oder unsubstituierten Heteroalkyl- oder Heteroalkenylresten mit bis zu 20 Kohlenstoffatomen und mindestens einem Sauerstoff- oder Stickstoffatom, oder funktionellen Gruppen, wie beispielsweise -OH oder -COOH. Beispiele für solche Derivate schließen beispielsweise 4-Methylen-1,3-Dioxolan-2-on, das an der 5-Position den R₂ Rest trägt, oder di-(Trimethylolpropan)dicarbonat, wobei der R₂ Rest in der 5-Position ein Methylen-Trimethylolmonocarbonatrest ist.

In verschiedenen Ausführungsformen in denen der R₂ Rest über eine Einfachbindung gebunden ist, kann das Ring-Kohlenstoffatom, dass den R₂ Rest trägt mit einem weiteren Substituenten, der wie die oben genannten Substituenten für die anderen Ring-Methylengruppen definiert ist, substituiert sein.

Weitere Derivate sind solche in denen eines oder beide der Ring-Sauerstoffatome durch Schwefelatome ersetzt sind sowie solche in denen alternativ oder zusätzlich das Carbonyl-Sauerstoffatom durch ein Schwefelatom ersetzt ist. Ein besonders bevorzugtes Derivat ist das 1,3-Oxathiolan-2-thion.

In verschiedenen Ausführungsformen ist das cyclische Carbonat 4-Methylen-1,3-Dioxolan-2-on, das an der 5-Position den R₂ Rest trägt. Wenn ein solches cyclisches Carbonat mit einem Alkenylether umgesetzt wird, der als reaktive Gruppe eine Aminogruppe trägt, kann sich eine Verbindung der Formel (la) bilden:

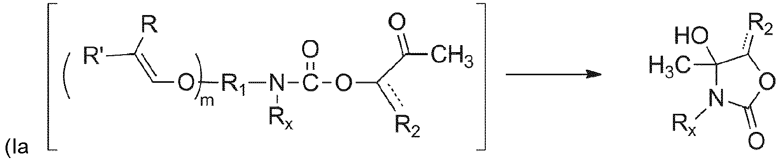

In dieser Verbindung sind m, R₁, R, R', R₂ und Rₓ wie oben für die Verbindungen der Formel (I)-(IV) definiert. Diese Verbindungen der Formel (la) enthalten keine Alkenylethergruppe und können daher zwar als Polyole für die Herstellung von Polyurethanen oder Polyestern verwendet werden, allerdings nur in Kombination mit weiteren Polyolen, die Alkenylethergruppen enthalten. Solche Verbindungen der Formel (la) sind daher erfindungsgemäß nicht bevorzugt.

Bei der Umsetzung der vorstehend beschriebenen Cyclocarbonate und deren Derivate der Formeln (IV) und (IVa) mit einer Verbindung der Formel (II), ist in verschiedenen Ausführungsformen in den Verbindungen der Formel (II) (i) X₁ -NH₂ oder ein Derivat davon, und in der Verbindung der Formel (IV) oder (IVa) ist r 1; oder (ii) X₁ ist -OH oder ein Derivat davon, und in der Verbindung der Formel (IV) oder (IVa) ist r 2.

In verschiedenen Ausführungsformen der Erfindung sind Alkenyletherpolyole bevorzugt, die mindestens eine Urethangruppe enthalten. Diese sind darstellbar durch Umsetzen der oben definierten Alkenylether die als reaktive Gruppe eine Aminogruppe tragen mit den beschriebenen zyklischen Carbonaten.

In weiteren Ausführungsformen ist das Alkenyletherpolyol durch Umsetzen der in Route B) aufgeführten Verbindungen darstellbar. Dabei wird das Alkenyletherpolyol hergestellt durch Umsetzen eines Alkenylethers, enthaltend mindestens eine 1-Alkenylethergruppe und mindestens eine funktionelle Gruppe ausgewählt aus (i) Epoxidgruppen und (ii) cyclischen Carbonatgruppen oder Derivaten davon, mit einem Alkohol, Thiol, einer Carbonsäure oder einem Amin oder Derivaten der vorgenannten.

In verschiedenen Ausführungsformen dieses Verfahrens ist das Alkenyletherpolyol ein Alkenyletherpolyol der Formel (V)

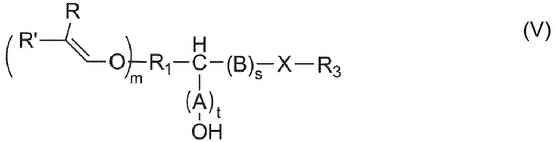

In den Verbindungen der Formel (V) ist R₁ wie oben für die Verbindungen der Formel (I) definiert. R₃ ist ein organischer Rest, optional mit mindestens einer -OH Gruppe und/oder 1 bis 1000 Kohlenstoffatomen, insbesondere ein (optional 2- oder mehrwertiges) lineares oder verzweigtes, substituiertes oder unsubstituiertes Alkyl mit 1 bis 50, vorzugsweise 1 bis 20 Kohlenstoffatomen oder ein (optional 2- oder mehrwertiges) lineares oder verzweigtes, substituiertes oder unsubstituiertes Heteroalkyl mit 1 bis 50, vorzugsweise 1 bis 20 Kohlenstoffatomen und mindestens einem Sauerstoff- oder Stickstoffatom. R₂ kann aber auch ein hochmolekularer Rest, wie beispielweise ein Polyalkylenglykolrest sein. Ein solcher (Poly)alkylenglykolrest kann beispielsweise die Formel -O-[CHRₐCH₂O]_{b}-R_{b} aufweisen, wobei Rₐ H oder ein C₁₋₄-Alkylrest, R_{b} -H oder ein organischer Rest oder 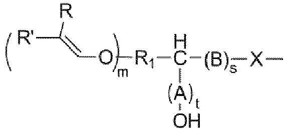 ist und b 1 bis 100 ist.

In den Verbindungen der Formel (V) ist X O, S, OC(=O), OC(=O)O, OC(=O)OC(=O), NR_{z}, NR_{z}C(=O)O, NR_{z}C(=O)NR_{z} oder OC(=O)NR_{z}. In bevorzugten Ausführungsformen ist X O, OC(=O)O, NR_{z} oder OC(=O)NR_{z}.

Jedes R und R' ist unabhängig ausgewählt aus H, C₁₋₂₀ Alkyl und C₂₋₂₀ Alkenyl, wobei insbesondere eines von R und R' H und das andere C₁₋₄ Alkyl oder beide H sind. Besonders bevorzugt ist R H und R' ist H oder -CH₃.

Jedes A und B ist unabhängig ausgewählt aus CR"R"', wobei R" und R'" unabhängig ausgewählt sind aus H, einer funktionellen Gruppe, wie beispielsweise -OH, -NH₂, -NO₂, -CN, -OCN, -SCN, - NCO, -NCS, -SH, -SO₃H oder -SO₂H, und einem organischen Rest. Insbesondere sind R" und R'" unabhängig H oder C₁₋₂₀ Alkyl. R" und R'" können aber auch gemeinsam oder zusammen mit dem Kohlenstoffatom an das sie gebunden sind einen organischen Rest, einschließlich zyklischer Reste, oder eine funktionelle Gruppe bilden. Beispiele für solche Reste sind =CH₂, =CH-Alkyl oder =C(Alkyl)₂, =O, =S, -(CH₂)ₐₐ- mit aa = 3 bis 5 bzw. Derivate davon, in denen eine oder mehrere Methylengruppen durch Heteroatome wie N, O oder S ersetzt sind. Zwei von R" und R'", die an benachbarte Kohlenstoffatome gebunden sind, können aber auch zusammen eine Bindung bilden. Dadurch wird zwischen den beiden benachbarten Kohlenstoffatome eine Doppelbindung ausgebildet (d.h. -C(R")=C(R")-).

In den Verbindungen der Formel (V) ist m eine ganze Zahl von 1 bis 10, vorzugsweise 1 oder 2, besonders bevorzugt 1. D.h. die Verbindungen tragen vorzugsweise nur eine oder 2 Alkenylethergruppe(n).

s und t sind jeweils 0 oder eine ganze Zahl von 1 bis 10. Dabei erfüllen sie die Bedingung s+t=1 oder mehr, insbesondere 1 oder 2. Es ist besonders bevorzugt, dass s oder t 1 ist und die andere 0 ist.

R_{z} ist H, ein organischer Rest oder

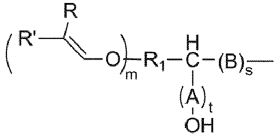

Damit das Alkyletherpolyol der Formel (V) die Bedingung erfüllt, dass es mindestens zwei Hydroxylgruppen trägt, ist wenn R_{z} nicht 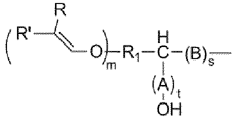 ist,
R₃ mit mindestens einem Substituenten substituiert, der ausgewählt ist aus -OH und

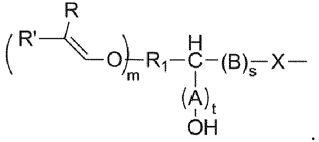

In weiteren bevorzugten Ausführungsformen ist das Verfahren dadurch gekennzeichnet, dass der Alkenylether, der mindestens eine 1-Alkenylethergruppe und mindestens eine funktionelle Gruppe ausgewählt aus (i) Epoxidgruppen und (ii) cyclischen Carbonatgruppen oder Derivaten davon enthält, ein Alkenylether der Formel (VI) oder (VII) ist

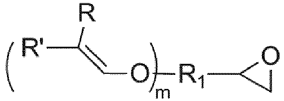

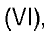

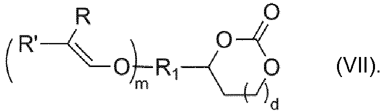

In den Verbindungen der Formel (VI) oder (VII) sind R₁, R, R' und m wie oben für die Verbindungen der Formeln (I) und (II) definiert.
d ist wie oben für die Formeln (IV) und (IVa) definiert, d.h. d ist 0, 1, 2, 3, 4 oder 5, vorzugsweise 0 oder 1, besonders bevorzugt 0.

In besonders bevorzugten Ausführungsformen ist R₁ in den Alkenylethern der Formel (VI) oder (VII) -C₁₋₁₀-Alkylenyl-O-CH₂-.

Die Epoxygruppen tragenden Alkenylether der Formel (VI) können am Epoxyrest substituiert sein, d.h. die Methylengruppen des Oxiranrings können, wie in Formel (IIIa) gezeigt, mit R₁₁-R₁₃ substituiert sein.

In verschiedenen Ausführungsformen sind die Alkenylether der Formel (VII) am Cyclocarbonatring substituiert oder der Cyclocarbonatring ist durch ein entsprechendes Derivat ersetzt. Geeignete substituierte Cyclocarbonate sowie Derivate davon sind solche, die oben im Zusammenhang mit Formel (IV) und (IVa) beschrieben wurden. Insbesondere ist der Cyclocarbonatrest vorzugsweise ein 1,3-Dioxolan-2-on- oder 1,3-Dioxan-2-on-Rest, der ggf. substituiert sein kann, beispielsweise mit einer Methylengruppe.

Geeignete Verbindungen der Formel (VI) schließen ein, ohne darauf beschränkt zu sein, Vinylglycidylether und 4-Glycidylbutylvinylether (GBVE), wobei letzterer durch Umsetzen von 4-Hydroxybutylvinylether mit Epichlorhydrin darstellbar ist.

Geeignete Verbindungen der Formel (VII) schließen ein, ohne darauf beschränkt zu sein, 4-(Ethenyloxymethyl)-1,3-Dioxolan-2-on, das beispielsweise durch Umesterung von Glycerincarbonat mit Ethylvinylether darstellbar ist oder 4-Glycerincarbonat(4-butylvinylether)ether (GCBVE), das durch Epoxidierung von Hydroxybutylvinylether (HBVE) und anschließende CO₂-Insertion darstellbar ist.

In verschiedenen Ausführungsformen wird der Alkenylether, der mindestens eine 1-Alkenylethergruppe und mindestens eine funktionelle Gruppe ausgewählt aus (i) Epoxidgruppen und (ii) cyclischen Carbonatgruppen oder Derivaten davon enthält, insbesondere einer der Formel (VI) oder (VII) mit einem Alkohol oder Amin umgesetzt. Bei dem Alkohol kann es sich um ein Diol oder Polyol oder ein entsprechendes Alkoholat handeln. Insbesondere kann der Alkohol ein Polyalkylenglykol der Formel HO-[CHRₐCH₂O]_{b}-H sein, wobei Rₐ H oder ein C₁₋₄-Alkylrest und b 1 bis 100, insbesondere 1 bis 10, ist.

Route B) stellt somit eine alternative Ausführungsform dar, in der die Epoxid- oder die cyclischen Carbonatverbindungen (beispielsweise Ethylencarbonat- oder Trimethylencarbonatverbindungen) mindestens eine oder mehrere Alkenylethergruppen aufweisen. Die Umsetzung dieser Epoxid- oder cyclischen Carbonatverbindungen mit gegenüber Epoxiden oder im Kontext dieser Erfindung chemisch ähnlich reagierenden Verbindungen (cyclische Carbonate) reaktiven Verbindungen, insbesondere solchen, die -OH, -COOH, -SH, -NH₂ und ähnliche Gruppen oder deren Derivate tragen - beispielsweise entsprechend funktionalisierte, vorzugsweise mehrfach entsprechend funktionalisierte lineare oder verzweigte, gesättigte oder teilweise ungesättigte, zusätzlich substituierte oder unsubstituierte, zyklische oder lineare (Hetero)Alkyle und (Hetero)Aryle - ergibt die gewünschten Alkenyletherpolyole.

Beispiele für Verbindungen, die mindestens eine der Gruppen -OH, -COOH, -SH, -NH₂ und deren derivatisierte Formen aber keine Alkenylethergruppen aufweisen, sind beispielsweise, ohne Einschränkung, Glykole, Polyglykole, Aminosäuren, Polyole und Di- und Polyamine, wie z.B. Glycin, Glycerol, Hexamethylendiamin, 1,4-Butandiol und 1,6-Hexandiol.

In verschiedenen Ausführungsformen sind Alkenyletherpolyole mit mindestens einer Urethangruppe, die sich durch Umsetzen von einem Alkenylether mit zyklischen Carbonatgruppen und einem Amin darstellen lassen, bevorzugt.

Bei den mittels der beschriebenen Verfahren herstellbaren oder erhältlichen Alkenyletherpolyole handelt es sich beispielsweise um Verbindungen der Formeln (I), (la) und (V), wie oben definiert.

In verschiedenen Ausführungsformen der Alkenyletherpolyole der Formel (I) ist:
(1) m = 1; R und R' sind H oder R ist H und R' ist Methyl; R₁ ist C₁₋₁₀ Alkylenyl, insbesondere C₁₋₆ Alkylenyl, X ist O, A und B sind CH₂, n und o sind 1 oder 0 und p ist 0, wobei n+o=1, und R₂ ist ein organischer Rest, der mit -OH substituiert ist oder einen weiteren Rest der Formel 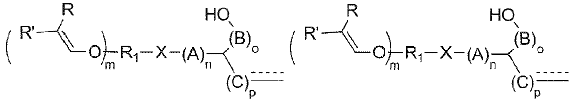 trägt wobei R₁, m, R, R', A, B, C, n, o und p wie vorstehend definiert sind; oder
(2) m = 1; R und R' sind H oder R ist H und R' ist Methyl; R₁ ist C₁₋₁₀ Alkylenyl, insbesondere C₁-₆ Alkylenyl, X ist NRₓ, A und B sind CH₂, n und o sind 1 oder 0 und p ist 0, wobei n+o=1, Rₓ ist H oder 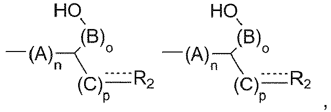 wobei A, B, C, n, o und p wie vorstehend definiert sind; und R₂ ist ein organischer Rest wie oben definiert, der wenn Rx H ist mit -OH substituiert ist oder einen weiteren Rest der Formel 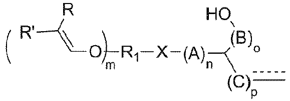 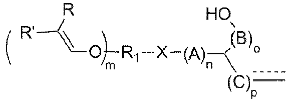 trägt wobei R₁, m, R, R', A, B, C, n, o und p wie vorstehend definiert sind; oder
(3) m = 1; R und R' sind H oder R ist H und R' ist Methyl; R₁ ist C₁₋₁₀ Alkylenyl, insbesondere C₁-₆ Alkylenyl, X ist OC(=O)O, A und B sind CH₂, n und o sind 1 oder 0 und p ist 0, wobei n+o=1, und R₂ ist ein organischer Rest, der mit -OH substituiert ist oder einen weiteren Rest der Formel 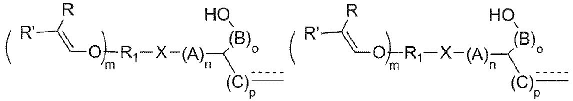 trägt wobei R₁, m, R, R', A, B, C, n, o und p wie vorstehend definiert sind; oder
(4) m = 1; R und R' sind H oder R ist H und R' ist Methyl; R₁ ist C₁₋₁₀ Alkylenyl, insbesondere C₁-₆ Alkylenyl, X ist NRₓC(=O)O, A und B sind CH₂, n und o sind 1 oder 0 und p ist 0, wobei n+o=1, Rₓ ist H oder 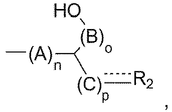 wobei A, B, C, n, o undp wie vorstehend definiert sind; und R₂ ist ein organischer Rest wie oben definiert, der wenn Rₓ H ist mit -OH substituiert ist oder einen weiteren Rest der Formel 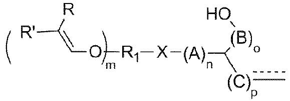 trägt wobei R₁, m, R, R', A, B, C, n, o und p wie vorstehend definiert sind.

In den vorstehend genannten Ausführungsformen ist R₂ vorzugsweise über eine Einfachbindung gebunden und kann beispielsweise ein Heteroalkylrest, insbesondere ein Alkyletherrest mit 2 bis 10 Kohlenstoffatomen sein. Geeignet sind beispielsweise Reste der Formel -CH₂-O-(CH₂)₄-O-CH₂- (für den Fall, dass R₂ zwei Alkenyletherreste der obigen Formel trägt) oder -CH₂-O-CH(CH₃)₂.

In verschiedenen Ausführungsformen der Alkenyletherpolyole der Formel (V) ist:
(1) m = 1; R und R' sind H oder R ist H und R' ist Methyl; R₁ ist -(CH₂)₁₋₁₀-O-CH₂-, insbesondere -(CH₂)₁₋₆-O-CH₂-, X ist O, A und B sind CH₂, s und t sind 1 oder 0, wobei s+t=1, und R₃ ist ein organischer Rest, der mit -OH substituiert ist oder einen weiteren Rest der Formel 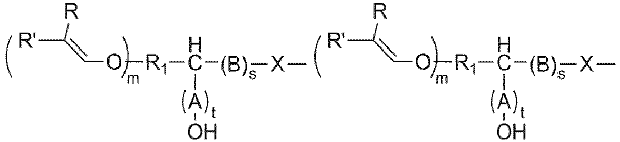 trägt wobei R₁, m, R, R', A, B, s und t wie vorstehend definiert sind; oder
(2) m = 1; R und R' sind H oder R ist H und R' ist Methyl; R₁ ist -(CH₂)₁₋₁₀-O-CH₂-, insbesondere -(CH₂)₁₋₆-O-CH₂-, X ist NR_{z}, A und B sind CH₂, s und t sind 1 oder 0, wobei s+t=1, R_{z} ist H oder 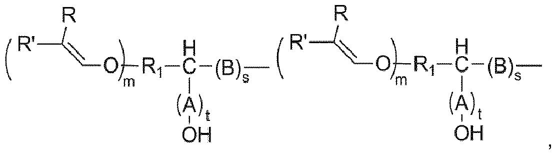 wobei A, B, m, s und t wie vorstehend definiert sind; und R₃ ist ein organischer Rest wie oben definiert, der wenn R_{z} H ist mit -OH substituiert ist oder einen weiteren Rest der Formel 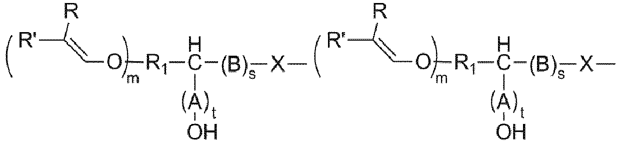 trägt wobei R₁, m, R, R', A, B, s und t wie vorstehend definiert sind; oder
(3) m = 1; R und R' sind H oder R ist H und R' ist Methyl; R₁ ist -(CH₂)₁₋₁₀-O-CH₂-, insbesondere -(CH₂)₁₋₆-O-CH₂-, X ist OC(=O)O, A und B sind CH₂, s und t sind 1 oder 0, wobei s+t=1, und R₃ ist ein organischer Rest, der mit-OH substituiert ist oder einen weiteren Rest der Formel 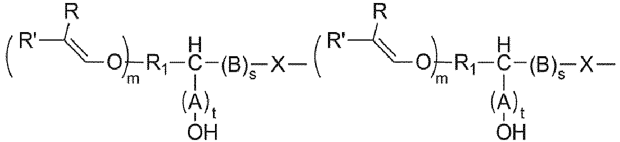 trägt wobei R₁, m, R, R', A, B, s und t wie vorstehend definiert sind; oder
(4) m = 1; R und R' sind H oder R ist H und R' ist Methyl; R₁ ist -(CH₂)₁₋₁₀-O-CH₂-, insbesondere -(CH₂)₁₋₆-O-CH₂-, X ist OC(=O)NR_{z}, A und B sind CH₂, s und t sind 1 oder 0, wobei s+t=1, R_{z} ist H oder 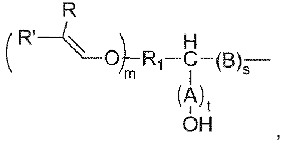 wobei A, B, m, s und t wie vorstehend definiert sind; und R₃ ist ein organischer Rest wie oben definiert, der wenn R_{z} H ist mit -OH substituiert ist oder einen weiteren Rest der Formel 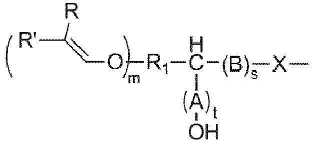 trägt wobei R₁, m, R, R', A, B, s und t wie vorstehend definiert sind.

In den vorstehend genannten Ausführungsformen der Verbindungen der Formel (V) ist R₃ beispielsweise ein Heteroalkylrest, insbesondere ein (Poly)Alkylenglykol, wie insbesondere Polypropylenglykol, oder ein C₁₋₁₀ Alkyl- oder Alkylenylrest.

Die Durchführung der einzelnen Stufen des beschriebenen Verfahrens zur Herstellung der Alkenyletherpolyole der Formel (I) oder (V) kann nach den für solche Reaktionen üblichen Methoden erfolgen. Dazu werden die Reaktionspartner, ggf. nach Aktivierung (beispielsweise Herstellung von Alkoholaten durch Umsetzen mit Natrium, miteinander in Kontakt gebracht und ggf. unter Schutzgasatmosphäre und Kontrolle der Temperatur umgesetzt.

Die vorstehend beschriebenen Alkenyletherpolyole werden dann in den erfindungsgemäßen Verfahren für die Synthese von Polymeren, insbesondere Polyhydroxyurethanen, durch Umsetzen mit Thiolverbindungen über eine Thiol-en Polyadditionsreaktion eingesetzt. Alternativ können anstelle der Alkenyletherpolyole auch Präpolymere, die diese als Monomereinheiten enthalten, eingesetzt werden. Beispiele für solche Präpolymere sind beispielsweise Polyurethane und Polyester, die sich durch Umsetzen mindestens eines der beschriebenen Alkenyletherpolyole oder einer Mischung von Polyolen, die mindestens eines der beschriebenen Alkenyletherpolyole enthält, mit Polyisocyanaten oder Polycarbonsäuren darstellen lassen. Je nachdem welche Komponente im Überschuß eingesetzt wird, lassen sich so OH- oder NCO-terminierte Polyurethane mit Alkenyletherseitenketten bzw. OH- oder COOH-terminierte Polyester mit Alkenyletherseitenketten erhalten. Diese können dann mit den Polythiolen erfindungsgemäß zu Polymeren umgesetzt werden.

Alternativ können Alkenylgruppen-haltige Verbindungen durch die Umsetzung mit Polythiolverbindungen vernetzt (gehärtet) werden. Bei den Alkenylgruppen-haltigen Verbindungen kann es sich um Alkenyletherpolyole wie oben definiert oder Polymere, die diese Alkenyletherpolyole als Monomereinheiten enthalten, handeln. Bei den Polymeren kann es sich beispielsweise um Polyurethane oder Polyester handeln, die sich durch Umsetzen mindestens eines der beschriebenen Alkenyletherpolyole oder einer Mischung von Polyolen, die mindestens eines der beschriebenen Alkenyletherpolyole enthält, mit Polyisocyanaten oder Polycarbonsäuren darstellen lassen.

Dabei sind die eingesetzen Thiolverbindungen organische Verbindungen, die mindestens zwei Thiolgruppen aufweisen, beispielsweise Dimercaptoverbindungen, vorzugsweise optional substituierte Dimercaptoalkane. Beispielhafte Verbindungen sind solche der Formel (VIII)

(HS)ᵤ-R₄-SH (VIII)

wobei
R₄ ein mindestens 2-wertiger organischer Rest ist, insbesondere ein mindestens 2-wertiges lineares oder verzweigtes, substituiertes oder unsubstituiertes Alkyl mit 1 bis 20 Kohlenstoffatomen oder lineares oder verzweigtes, substituiertes oder unsubstituiertes Heteroalkyl mit 1 bis 20 Kohlenstoffatomen und mindestens einem Sauerstoff- oder Stickstoffatom; und
u eine ganze Zahl von 1 bis 10, vorzugsweise 1 bis 5 ist.

Beispiele für geeignete Polythiolverbindungen sind beispielsweise 1,2-Ethandithiol, 1,8-Dimercapto-3,6-dioxaoctane (DMDO), Glycoldi(3-mercaptopropionat) (GDMP), Trimethylolpropantri(3-mercapto-propionat) (TMPMP), Pentaerythritoltetra(3-mercaptopropionat) (PETMP), Dipentaerythritol-hexakis(3-mercaptopropionat) (Di-PETMP), Ditrimethylolpropantetra(3-mercaptopropionat) (Di-TMPMP), Glycoldimercaptoacetat (GDMA), Trimethylolpropantrimercaptoacetat (TMPMA), Pentaerythritoltetramercaptoacetat (PETMA), Ethoxyliertes TMPMP (ETTMP), Propylenglykol(3-mercaptopropionat) (PPGMP), 2,3-Di((2-mercaptoethyl)thio)-1-propanethiol (DMPT), Dimercaptodiethylsulfid (DMDS), Tris[2-(3-mercaptopropionyloxy)ethyl]isocyanurat (TEMPIC), oder Mercaptoacetate und Mercaptopropionate diverser alkoxylierter Polyole. Derartige Polythiole sind kommerziell von Bruno Bock GmbH & Co. KG (Marschacht, DE) erhältlich.

Bei den erfindungsgemäßen Verfahren zur Herstellung von Polymeren, insbesondere linearen Polymeren, werden vorzugsweise Dithiole eingesetzt. Bei den erfindungsgemäßen Verfahren zur Vernetzung von Polymeren werden vorzugsweise Dithiole noch bevorzugter höherwertige Thiole, wie Trithiole oder Tetrathiole eingesetzt.

In verschiedenen Ausführungsformen des erfindungsgemäßen Verfahrens, werden die Reaktionspartner, d.h. die Alkenyletherpolyole/Alkenylethergruppe-haltigen Polymere und die Thiole, in Anwesenheit eines Photoinitiators, wie z.B. 2,2'-Azobis(2,4-dimethylvaleronitril) durch Exposition gegenüber elektromagnetischer Strahlung zur Reaktion gebracht. Bei dem Reaktionsmechanismus handelt es sich um eine Radikal-vermittelte Polyaddition (Thiol-en). Die Reaktion kann in Lösung in einem geeigneten organischen Lösungsmittel, wie z.B. THF, erfolgen, da dabei die Reaktionskontrolle einfacher sein kann. Darüber hinaus sind neben entsprechenden Photoinitiatoren prinzipiell auch Initiatoren für radikalischen Umsetzungen geeignet, die sich durch Temperatur und/oder Redoxreaktionen aktivieren lassen. Beispiele hierfür sind Azoinitiatoren wie AIBN, organische Peroxidverbindungen, Redoxpaare (SFS, H₂O₂, tert.-Butylperoxid, Acscorbinsäure) und alle weiteren dam Fachmann für diesen Zweck bekannten System.

Bevorzugt ist die Verwendung von Photoinitiatorsystemen, wobei generell alle im Stand der Technik bekannten Photoinitiatoren geeignet sind. Diese können optional auch in Kombination mit bekannten Sensitizern oder auch anderen Radikalinitiatoren eingesetzt werden.

Die elektromagnetische Strahlung kann insbesondere sichtbares Licht oder UV-Licht sein und wird in Abhängigkeit der eingesetzten Photoinitiatoren gewählt.

Die Initiierung der Polymersynthese durch Strahlung ist ein deutlicher Anwendungsvorteil gegenüber der gewöhnlichen Polymerisation, insbesondere für vernetzende Systeme. Die entsprechenden Formulierungen, die die Reaktionspartner enthalten, stellen ein latent reaktives 1K-System dar, dessen Härtung erst bei Bestrahlung aktiv eingeleitet wird.

In den Verfahren werden die Alkenyletherpolyole bzw. die (Prä)Polymere, die die Alkenyletherpolyole als Monomereinheiten enthalten, und Thiole in verschiedenen Ausführungsformen in solchen Mengen eingesetzt, dass das molare Verhältnis von Alkenylethergruppen zu Thiolgruppen im Bereich von 0,1 bis 10, vorzugsweise im Bereich von 0,8 bis 2,0 liegt.

Die Erfindung betrifft schließlich auch die mittels der hierin beschriebenen Verfahren herstellbaren Polymere, insbesondere die Polyhydroxyurethane und vernetzten Polymere. Die Polyhydroxyurethane können auch in Form von wasserbasierten Dispersionen (PUD) bereitgestellt werden.

Ferner erfasst die Erfindung auch Zusammensetzungen, die die hierin beschriebenen Polymere enthalten, insbesondere Klebstoffe, Dichtstoffe und Beschichtungsmittel.

Ebenfalls Gegenstand der Erfindung ist die Verwendung der hierin beschriebenen Polymere als Bestandteil von Klebstoff-, Dichtstoff- und Beschichtungsmittelzusammensetzung. Derartige Zusammensetzungen können ferner alle dem Fachmann bekannten üblichen Zusatz- und Hilfsstoffe enthalten.

Alle hierin im Zusammenhang mit den erfindungsgemäßen Verfahren zur Herstellung der Polymere bzw. den Verfahren zur Vernetzung von alkenylethergruppen-haltigen Polymeren mit Thiolverbindungen offenbarten Ausführungsformen sind ebenso auf die beschriebenen Polymere als solche, sowie deren Verwendung und Verfahren zu deren Verwendung übertragbar und umgekehrt.

Die Erfindung wird im Folgenden anhand von Beispielen weiter veranschaulicht, wobei diese nicht als Einschränkung verstanden werden sollten.

### Beispiele

### Verwendete Materialien:

4-Hydroxybutylvinylether (HBVE) (BASF, 99% stabilisiert mit 0,01 % KOH), Epichlorhydrin (ECH, Solvay, 99,8%), Tetrabutylammoniumbromid (TBAB, Merck, 99%), Tetraethylammoniumbromide (TEAB, Merck, 99%), 1,4-Butandioldiglycidylether (BDDGE, Sigma-Aldrich, 95%), Di(trimethylolpropan) (di-TMP, Sigma-Aldrich, 97%), Ethylchloroformiat (Alfa Aesar, 97%), Triethylamin (Acros Organics, 99%), Ethylenglykol-bis(aminopropyl)ether (EGBAPE, Huntsman, Jeffamin EDR-176), 3-Aminopropylvinylether (APVE, BASF, 99.7%), Hexamethylendiisocyanat (HDI, Acros Organics, 99%), Dimethylzinndineodecanoat (Momentive, Fomrez catalyst UL-28), Methanol (VWR Chemicals), 10-[1,1'-Biphenyl]-4-yl-2-(1-methylethyl)-9-oxo-9H-thioxanthenium hexafluorophosphat (Omnicat 550, IGM), Dimercapto-1,8-dioxa-3,6-octane (DMDO, Arkema), Pentaerythritoltetra(3-mercaptopropionat) (Bruno Bock, Thiocure PETMP, 95%) und 2,2'Azobis(2,4-dimethylvaleronitril) (Wako V65) wurden wie erhalten verwendet.

### Beispiel 1: Synthese von di-Trimethylolpropandicarbonat (di-TMPDC)

Di-TMPDC wurde gemäß Yang et al. (Polymer 2013, 54, (11), 2668-2675) synthetisiert. Dazu wurden 37.55 g (0.15 mol) di-TMP in 1 L trockenem THF aufgelöst und auf -10 °C gekühlt. 97.67 g (0.9 mol) Ethylchloroformiat wurden bei dieser Temperatur tropfenweise zugegeben. Danach wurde unter denselben Bedingungen Triethylamin zugegeben bevor die Mischung über Nacht ohne Kühlen gerührt wurde. Die Mischung wurde filtriert und mit Wasser gewaschen. Die organische Lösung wurde unter reduziertem Druck konzentriert, das Produkt in Diethylether gefällt und aus THF umkristallisiert um einen weißen Feststoff zu ergeben. Ausbeute: 76%. Elementaranalyse: C, 55.69; H, 7.37; O, 36.94 (berechnet: C, 55.62; H, 7.33; O, 37.05 for C₁₄H₂₂O₇). MS (Cl): m/z = 320.1 [M+NH4]⁺ (berechnet: 302.2 for C₁₄H₂₂O₇NH₄). ¹H NMR (400 MHz, CDCl₃, 298 K) δ (ppm): 0.95 (t, 6H, CH3), 1.49 (q, 4H, CH₂-CH₃), 3.49 (s, 4H, CH₂-O), 4.22 (dd, 8H, CH₂ cyclisches Carbonat).

### Beispiel 2: Synthese des Vinyletherpolyols

9.10 g (30 mmol) di-TMPDC aus Beispiel 1 und 6.09 g (60 mmol) APVE wurden gemischt und für 22 h unter Stickstoffatmosphäre auf 80 °C erhitzt. Die Konversion wurde mittels IR Spektroskopie unter Verwendung der C=O Streckschwingung des fünf-gliedrigen Carbonats und dem Urethan bei 1780 cm⁻¹ bzw. 1690 cm⁻¹ verfolgt.

### Beispiel 3: Synthese des linearen Polyhydroxyurethans

4,28 g (8,5 mmol) des Vinyletherpolyols aus Beispiel 2, 1,55 g (8,5 mmol) 1,8-Dimercapto-3,6-dioxaoctan (DMDO) und 0,058 g (1 Gew.-%) 2,2'-Azobis(2,4-dimethylvaleronitril) wurden in einen 100 ml Dreihalsrundkolben gegeben, in 50 ml THF aufgelöst und mit Stickstoff gespült. Eine Loctite 97034 Lichtquelle ausgerüstet mit einem UVC 97327 Lichtleiter wurde an den mittleren Hals angeschlossen und die Reaktion durch UV Bestrahlung für 900 Sekunden bei Raumtemperatur unter Rühren mit 500 U/min gestartet. THF wurde unter reduziertem Druck entfernt und IR Spektroskopie zeigte den Verbrauch von Vinylether und funktionellen Thiolgruppen an.

### Beispiel 4: Synthese des vernetzten Polyhydroxyurethans

1,01 g (2 mmol) des Vinyletherpolyols aus Beispiel 2, 0,43 g (1 mmol) PETMP und 7,3 mg g (0,5 Gew.-%) 2,2'-Azobis(2,4-dimethylvaleronitril) wurden gemischt und die Probe in einem Rheometer gehärtet. Rheologische und NIR spektroskopische Untersuchungen der UV-induzierten Härtungsreaktion wurden unter Verwendung eines Anton Paar MCR 302 Rheometers gekoppelt an ein Bruker MPA FT-NIR Spektrometer und eine Omnicure S 2000 SC Lichtquelle durchgeführt. Das Instrument war in einer Platten/Platten Geometrie unter Verwendung einer Quarzglas Bodenplatte und einer wegwerfbaren Aluminiumdeckplatte mit einem Durchmesser von 25 mm bei einer anfänglichen Spaltdistanz von 100 µm aufgebaut. Eine Normalkraft von 0 wurde angewendet, um Spannung durch die Kontraktion oder Expansion der Probe zu vermeiden. Die Messung wurde bei 75°C unter instrumenteller Luftatmosphäre (H₂O: 1.1 mg/m³) durchgeführt. Anfänglich wurden die Daten alle 5 s mit einer sinusoidalen Spannung von 10% bei einer Frequenz von 10 Hz aufgenommen. Die Probe wurde dann für 30 s mit einer Intensität von 189 mW cm⁻² UVA-C bestrahlt. Diese Intensität wurde an der Oberfläche der Quarzplatte unter Verwendung eines Spektralradiometers (OpSyTec Dr. Göbel) bestimmt. Während der Bestrahlung wurden mechanische Daten mit einer Rate von 1 s⁻¹ aufgenommen und die sinusoidale Spannung wurde linear auf 0.5% innerhalb von 210 s angehoben und für weitere 360 s konstant gehalten. NIR Spektren wurden mit einer Rate von ungefähr 2 s⁻¹ mit einer Auflösung von 16 cm⁻¹ aufgenommen. Die Umwandlung der Vinyletherdoppelbindung wurde durch das Beobachten der charakteristischen Absorption der C-H Streckoberschwingung bei 6200 cm⁻¹ verfolgt.

## Patentansprüche

1. Verfahren zur Herstellung eines Polyhydroxyurethanpolymers, umfassend Umsetzen mindestens eines Alkenyletherpolyols enthaltend mindestens eine 1-Alkenylethergruppe, und mindestens zwei Hydroxylgruppen (-OH), oder eines Präpolymers, das mindestens ein solches Alkenyletherpolyol als Monomereinheit enthält, mit einer Verbindung, die mindestens zwei Thiolgruppen enthält.

2. Verfahren zum Vernetzen einer Verbindung, die mindestens eine 1-Alkenylethergruppe enthält, vorzugsweise eines Alkenyletherpolyols enthaltend mindestens eine 1-Alkenylethergruppe, und mindestens zwei Hydroxylgruppen (-OH), oder eines Polymers, das mindestens ein solches Alkenyletherpolyol als Monomereinheit enthält, insbesondere eines Polyurethans oder Polyesters, umfassend Umsetzen der Verbindung mit einer Verbindung, die mindestens zwei Thiolgruppen enthält.

3. Verfahren nach Anspruch 1 oder 2, **dadurch gekennzeichnet, dass** das Alkenyletherpolyol erhältlich ist durch
A) Umsetzen eines Alkenylethers, enthaltend mindestens eine 1-Alkenylethergruppe und mindestens eine funktionelle Gruppe ausgewählt aus -OH, -COOH, -SH, -NH₂ und deren Derivaten, mit (i) einem Epoxid oder (ii) einem cyclischen Carbonat oder Derivat davon; oder
B) Umsetzen eines Alkenylethers, enthaltend mindestens eine 1-Alkenylethergruppe und mindestens eine funktionelle Gruppe ausgewählt aus (i) Epoxidgruppen und (ii) cyclischen Carbonatgruppen oder Derivaten davon, mit einem Alkohol, Thiol, einer Carbonsäure oder einem Amin oder Derivaten der vorgenannten.

4. Verfahren nach Anspruch 3, wobei das Alkenyletherpolyol erhältlich ist durch Umsetzen eines Alkenylethers, enthaltend mindestens eine 1-Alkenylethergruppe und mindestens eine funktionelle Gruppe ausgewählt aus -OH, -COOH, -SH, -NH₂ und deren Derivaten, mit (i) einem Epoxid oder (ii) einem cyclischen Carbonat oder Derivat davon, **dadurch gekennzeichnet, dass** das Alkenyletherpolyol ein Alkenyletherpolyol der Formel (I) ist 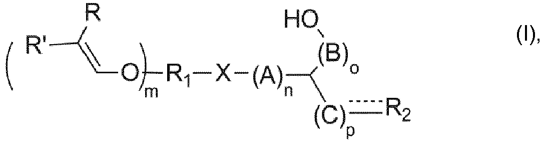 wobei
R₁ ein mindestens 2-wertiger organischer Rest ist, insbesondere ein mindestens 2-wertiges lineares oder verzweigtes, substituiertes oder unsubstituiertes Alkyl mit 1 bis 20 Kohlenstoffatomen oder lineares oder verzweigtes, substituiertes oder unsubstituiertes Heteroalkyl mit 1 bis 20 Kohlenstoffatomen und mindestens einem Sauerstoff- oder Stickstoffatom,
R₂ ein organischer Rest ist, optional mit mindestens einer -OH Gruppe und/oder 1 bis 1000 Kohlenstoffatomen, insbesondere ein optional 2- oder mehrwertiges, lineares oder verzweigtes, substituiertes oder unsubstituiertes Alkyl mit 1 bis 20 Kohlenstoffatomen oder lineares oder verzweigtes, substituiertes oder unsubstituiertes Heteroalkyl mit 1 bis 20 Kohlenstoffatomen und mindestens einem Sauerstoff- oder Stickstoffatom,
X O, S, C(=O)O, OC(=O)O, C(=O)OC(=O)O, NRₓ, NRₓC(=O)O, NRₓC(=O)NRₓ oder OC(=O)NRₓ ist,
jedes R und R' unabhängig ausgewählt ist aus H, C₁₋₂₀ Alkyl und C₂₋₂₀ Alkenyl, wobei insbesondere eines von R und R' H und das andere C₁₋₄ Alkyl oder beide H sind,
jedes A, B und C unabhängig ausgewählt ist aus CR"R"',
R" und R'" unabhängig ausgewählt sind aus H, einer funktionellen Gruppe, und einem organischen Rest, insbesondere H und C₁₋₂₀ Alkyl, oder R" und R'" gemeinsam oder mit dem Kohlenstoffatom an welches sie gebunden sind ein organischer Rest sind, oder zwei von R" und R'" die an benachbarte Kohlenstoffatome gebunden sind, zusammen eine Bindung bilden um eine Doppelbindung zwischen den benachbarten Kohlenstoffatomen auszubilden,
- - - - - - eine Einfach- oder Doppelbindung ist, wobei wenn es eine Doppelbindung ist,
das Kohlenstoffatom, das an R₂ gebunden ist, nur einen Substituenten R" oder R'" trägt,
m eine ganze Zahl von 1 bis 10, vorzugsweise 1, ist,
n, p und o jeweils 0 oder eine ganze Zahl von 1 bis 10 sind, wobei n+p+o=1 oder mehr ist, insbesondere 1 oder 2, und
Rₓ H, ein organischer Rest oder 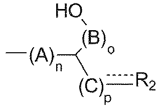 ist,
wobei wenn Rₓ nicht 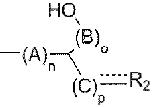 ist, R₂ mindestens einen Substituenten aufweist, der ausgewählt ist aus -OH und

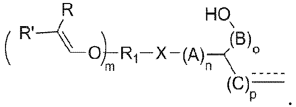

5. Verfahren nach Anspruch 3, wobei das Alkenyletherpolyol erhältlich ist durch Umsetzen eines Alkenylethers, enthaltend mindestens eine 1-Alkenylethergruppe und mindestens eine funktionelle Gruppe ausgewählt aus (i) Epoxidgruppen und (ii) cyclischen Carbonatgruppen oder Derivaten davon, mit einem Alkohol, Thiol, einer Carbonsäure oder einem Amin oder Derivaten der vorgenannten, **dadurch gekennzeichnet, dass** das Alkenyletherpolyol ein Alkenyletherpolyol der Formel (V) ist 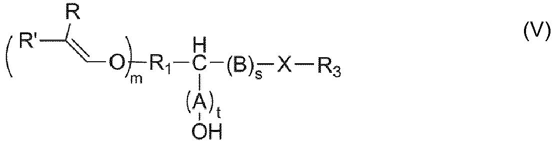 wobei
R₁ ein mindestens 2-wertiger organischer Rest ist, insbesondere ein mindestens 2-wertiges lineares oder verzweigtes, substituiertes oder unsubstituiertes Alkyl mit 1 bis 20 Kohlenstoffatomen oder lineares oder verzweigtes, substituiertes oder unsubstituiertes Heteroalkyl mit 1 bis 20 Kohlenstoffatomen und mindestens einem Sauerstoff- oder Stickstoffatom,
R₃ ein organischer Rest ist, optional mit 1 bis 1000 Kohlenstoffatomen, insbesondere ein optional 2- oder mehrwertiges, lineares oder verzweigtes, substituiertes oder unsubstituiertes Alkyl mit 1 bis 20 Kohlenstoffatomen, lineares oder verzweigtes, substituiertes oder unsubstituiertes Heteroalkyl mit 1 bis 20 Kohlenstoffatomen und mindestens einem Sauerstoff- oder Stickstoffatom, oder ein (Poly)Alkylenglykol der Formel -O-[CHRₐCH₂O]_{b}-R_{b} ist, wobei Rₐ H oder ein C₁₋₄-Alkylrest, R_{b} H oder 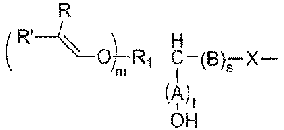
und b 1 bis 100 ist;
X O, S, OC(=O), OC(=O)O, OC(=O)OC(=O), NR_{z}, NR_{z}C(=O)O, NR_{z}C(=O)NR_{z} oder OC(=O)NR_{z} ist,
jedes R und R' unabhängig ausgewählt ist aus H, C₁₋₂₀ Alkyl und C₂₋₂₀ Alkenyl, wobei insbesondere eines von R und R' H und das andere C₁₋₄ Alkyl oder beide H sind,
jedes A und B unabhängig ausgewählt ist aus CR"R"',
R" und R'" unabhängig ausgewählt sind aus H, einer funktionellen Gruppe, und einem organischen Rest, insbesondere H und C₁₋₂₀ Alkyl, oder R" und R'" gemeinsam oder mit dem Kohlenstoffatom an welches sie gebunden sind ein organischer Rest sind, oder zwei von R" und R'" die an benachbarte Kohlenstoffatome gebunden sind, zusammen eine Bindung bilden um eine Doppelbindung zwischen den benachbarten Kohlenstoffatomen auszubilden,
m eine ganze Zahl von 1 bis 10, vorzugsweise 1, ist,
s und t jeweils 0 oder eine ganze Zahl von 1 bis 10 sind, wobei s+t=1 oder mehr ist, insbesondere 1 oder 2, und
R_{z} H, ein organischer Rest oder 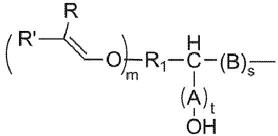 ist,
wobei wenn R_{z} nicht 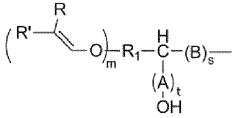 ist,
R₃ mindestens einen Substituenten aufweist, der ausgewählt ist aus -OH und

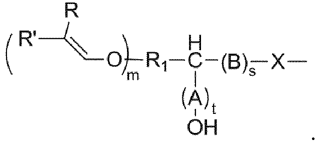

6. Verfahren nach einem der Ansprüche 1 bis 5, **dadurch gekennzeichnet, dass** die Verbindung die mindestens zwei Thiolgruppen enthält, eine Dimercaptoverbindung, vorzugsweise ein optional substituiertes Dimercaptoalkan ist.

7. Verfahren nach Anspruch 6, **dadurch gekennzeichnet, dass** die Verbindung die mindestens zwei Thiolgruppen enthält, eine Verbindung der Formel (VI) ist
(HS)ᵤ-R₄-SH (VI)
wobei
R₄ ein mindestens 2-wertiger organischer Rest ist, insbesondere ein mindestens 2-wertiges lineares oder verzweigtes, substituiertes oder unsubstituiertes Alkyl mit 1 bis 20 Kohlenstoffatomen oder lineares oder verzweigtes, substituiertes oder unsubstituiertes Heteroalkyl mit 1 bis 20 Kohlenstoffatomen und mindestens einem Sauerstoff- oder Stickstoffatom; und
u eine ganze Zahl von 1 bis 10, vorzugsweise 1 bis 5 ist.

8. Verfahren nach einem der Ansprüche 1 bis 7, **dadurch gekennzeichnet, dass** das molare Verhältnis von Alkenylethergruppen zu Thiolgruppen im Bereich von 0,1 bis 10, vorzugsweise 0,8 bis 2,0 liegt.

9. Hydroxylgruppen-haltiges Polymer oder vernetzte Verbindung erhältlich mittels des Verfahrens nach einem der Ansprüche 1-8.

10. Hydroxylgruppenhaltiges Polymer, insbesondere Polyhydroxyurethan, nach Anspruch 9, **dadurch gekennzeichnet, dass** das Polymer ein zahlenmittleres Molekulargewicht Mₙ von mindestens 1000 g/mol, vorzugsweise mindesten 2000 g/mol, noch bevorzugter mindestens 4000 g/mol aufweist.

11. Zusammensetzung, insbesondere Klebstoff-, Dichtstoff- oder Beschichtungsmittelzusammensetzung, enthaltend ein Hydroxylgruppen-haltiges Polymer nach Anspruch 9 oder 10.

12. Verwendung eines Hydroxylgruppen-haltigen Polymers nach Anspruch 9 oder 10 als Bestandteil einer Klebstoff-, Dichtstoff- oder Beschichtungsmittelzusammensetzung.

## Claims

1. A method for preparing a polyhydroxyurethane polymer, comprising reacting at least one alkenyl ether polyol, containing at least one 1-alkenyl ether group, and at least two hydroxyl groups (-OH), or a prepolymer which contains at least one alkenyl ether polyol of this kind as a monomer unit, with a compound which contains at least two thiol groups.

2. A method for crosslinking a compound which contains at least one 1-alkenyl ether group, preferably an alkenyl ether polyol containing at least one 1-alkenyl ether group, and at least two hydroxyl groups (-OH), or a polymer which contains at least one alkyl ether polyol of this kind as a monomer unit, in particular a polyurethane or polyester, comprising reacting the compound with a compound which contains at least two thiol groups.

3. The method according to claim 1 or 2, **characterized in that** the alkenyl ether polyol can be obtained by
A) reacting an alkenyl ether, containing at least one 1-alkenyl ether group and at least one functional group selected from -OH, -COOH, -SH, -NH₂ and derivatives thereof, with (i) an epoxide or (ii) a cyclic carbonate or derivative thereof; or
B) reacting an alkenyl ether, containing at least one 1-alkenyl ether group and at least one functional group selected from (i) epoxide groups and (ii) cyclic carbonate groups or derivatives thereof, with an alcohol, thiol, a carboxylic acid, or an amine or derivatives thereof.

4. The method according to claim 3, it being possible to obtain the alkenyl ether polyol by reacting an alkenyl ether, containing at least one 1-alkenyl ether group and at least one functional group selected from -OH, -COOH, -SH, -NH₂ and derivatives thereof, with (i) an epoxide or (ii) a cyclic carbonate or derivative thereof, **characterized in that** the alkenyl ether polyol is an alkenyl ether polyol of formula (I) 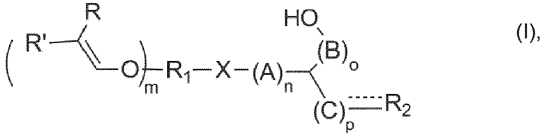 where
R₁ is an at least divalent organic group, in particular an at least divalent linear or branched, substituted or unsubstituted alkyl having 1 to 20 carbon atoms or linear or branched, substituted or unsubstituted heteroalkyl having 1 to 20 carbon atoms and at least one oxygen or nitrogen atom,
R₂ is an organic group, optionally having at least one -OH group and/or from 1 to 1000 carbon atoms, in particular an optionally divalent or polyvalent, linear or branched, substituted or unsubstituted alkyl having 1 to 20 carbon atoms or linear or branched, substituted or unsubstituted heteroalkyl having 1 to 20 carbon atoms and at least one oxygen or nitrogen atom,
X is O, S, C(=O)O, OC(=O)O, C(=O)OC(=O)O, NRₓ, NRₓC(=O)O, NRₓC(=O)NRₓ or OC(=O)NRₓ,
each R and R' is independently selected from H, C₁₋₂₀ alkyl and C₂₋₂₀ alkenyl, in particular one of R and R' being H and the other being C₁₋₄ alkyl or both R and R' being H,
each A, B and C is independently selected from CR"R"',
R" and R'" are independently selected from H, a functional group and an organic group, in particular H and C₁₋₂₀ alkyl, or R" and R'" together or with the carbon atom to which they are bonded are an organic group, or two of R" and R'" that are bonded to adjacent carbon atoms together form a bond in order to form a double bond between the adjacent carbon atoms,
- - - - - - is a single or double bond, and, if it is a double bond, the carbon atom that is bonded to R₂ carries only one substituent R" or R"',
m is an integer of from 1 to 10, preferably 1,
n, p and o are each 0 or an integer of from 1 to 10, where n + p + o = 1 or more, in particular 1 or 2, and
Rₓ is H, an organic group or 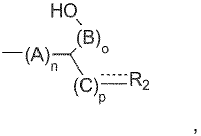 and, if Rₓ is not 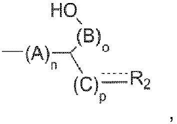 R₂ comprises at least one substituent that is selected from -OH and

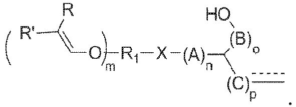

5. The method according to claim 3, it being possible to obtain the alkenyl ether polyol by reacting an alkenyl ether, containing at least one 1-alkenyl ether group and at least one functional group selected from (i) epoxide groups and (ii) cyclic carbonate groups or derivatives thereof, with an alcohol, thiol, a carboxylic acid, or an amine or derivatives thereof, **characterized in that** the alkenyl ether polyol is an alkenyl ether polyol of formula (V) 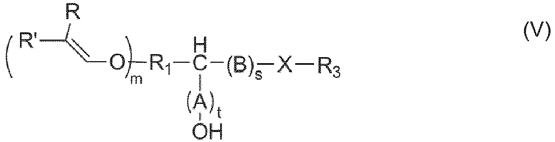 where
R₁ is an at least divalent organic group, in particular an at least divalent linear or branched, substituted or unsubstituted alkyl having 1 to 20 carbon atoms or linear or branched, substituted or unsubstituted heteroalkyl having 1 to 20 carbon atoms and at least one oxygen or nitrogen atom,
R₃ is an organic group, optionally having 1 to 1000 carbon atoms, in particular an optionally divalent or polyvalent, linear or branched, substituted or unsubstituted alkyl having 1 to 20 carbon atoms, linear or branched, substituted or unsubstituted heteroalkyl having 1 to 20 carbon atoms and at least one oxygen or nitrogen atom, or a (poly)alkylene glycol of the formula -O-[CHRₐCH₂O]_{b}-R_{b}, where Rₐ is H or a C₁₋₄ alkyl group, R_{b} is H or 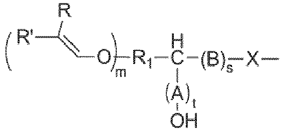
and b is from 1 to 100;
X is O, S, OC(=O), OC(=O)O, OC(=O)OC(=O), NR_{z}, NR_{z}C(=O)O, NR_{z}C(=O)NR_{z} or OC(=O)NR_{z},
each R and R' is independently selected from H, C₁₋₂₀ alkyl and C₂₋₂₀ alkenyl, in particular one of R and R' being H and the other being C₁₋₄ alkyl or both R and R' being H,
each A and B is independently selected from CR"R"',
R" and R'" are independently selected from H, a functional group and an organic group, in particular H and C₁₋₂₀ alkyl, or R" and R'" together or with the carbon atom to which they are bonded are an organic group, or two of R" and R'" that are bonded to adjacent carbon atoms together form a bond in order to form a double bond between the adjacent carbon atoms, m is an integer of from 1 to 10, preferably 1,
s and t are each 0 or an integer of from 1 to 10, where s + t = 1 or more, in particular 1 or 2, and
R_{z} is H, an organic group or 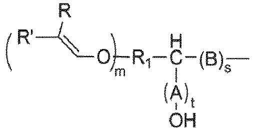
and, if R_{z} is not 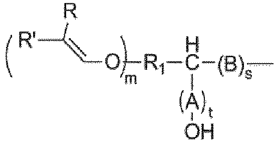
R₃ comprises at least one substituent that is selected from -OH and

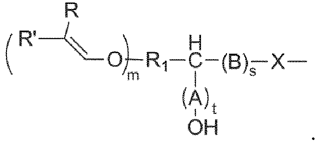

6. The method according to one of claims 1 to 5, **characterized in that** the compound which contains at least two thiol groups is a dimercapto compound, preferably an optionally substituted dimercapto alkane.

7. The method according to claim 6, **characterized in that** the compound which contains at least two thiol groups is a compound of formula (VI)
(HS)ᵤ-R₄-SH (VI)
where
R₄ is an at least divalent organic group, in particular an at least divalent linear or branched, substituted or unsubstituted alkyl having 1 to 20 carbon atoms or linear or branched, substituted or unsubstituted heteroalkyl having 1 to 20 carbon atoms and at least one oxygen or nitrogen atom; and
u is an integer of from 1 to 10, preferably from 1 to 5.

8. The method according to one of claims 1 to 7, **characterized in that** the molar ratio of alkenyl ether groups to thiol groups is in the range of from 0.1 to 10, preferably from 0.8 to 2.0.

9. A hydroxyl group-containing polymer or crosslinked compound which can be obtained by means of the method according to one of claims 1 to 8.

10. The hydroxyl group-containing polymer, in particular polyhydroxyurethane, according to claim 9, **characterized in that** the polymer has a number average molecular weight Mₙ of at least 1000 g/mol, preferably at least 2000 g/mol, even more preferably at least 4000 g/mol.

11. A composition, in particular an adhesive composition, sealant composition or coating agent composition, containing a hydroxyl group-containing polymer according to claim 9 or 10.

12. The use of a hydroxyl group-containing polymer according to claim 9 or 10 as a component of an adhesive composition, sealant composition or coating agent composition.

## Revendications

1. Procédé de production d'un polymère polyhydroxyuréthane comprenant la réaction d'au moins un alcénylétherpolyol contenant au moins un groupe 1-alcényléther, et d'au moins deux groupes hydroxyle (-OH), ou d'un prépolymère contenant au moins un tel alcénylétherpolyol en tant qu'unité monomère, avec un composé contenant au moins deux groupes thiol.

2. Procédé de réticulation d'un composé contenant au moins un groupe 1-alcényléther, de préférence d'un alcénylétherpolyol contenant au moins un groupe 1-alcényléther, et d'au moins deux groupes hydroxyle (-OH), ou d'un polymère contenant au moins un tel alcénylétherpolyol en tant qu'unité monomère, en particulier d'un polyuréthane ou d'un polyester, comprenant la réaction du composé avec un composé contenant au moins deux groupes thiol.

3. Procédé selon la revendication 1 ou 2, **caractérisé en ce que** l'alcénylétherpolyol peut être obtenu par
A) la réaction d'un alcényléther contenant au moins un groupe 1-alcényléther et au moins un groupe fonctionnel choisi parmi -OH, -COOH, -SH, -NH₂ et les dérivés de ces derniers, avec (i) un époxyde ou (ii) un carbonate cyclique ou un dérivé de celui-ci ; ou
B) la réaction d'un alcényléther contenant au moins un groupe 1-alcényléther et au moins un groupe fonctionnel choisi parmi (i) des groupes époxydes et (ii) des groupes carbonates cycliques ou les dérivés de ces derniers, avec un alcool, un thiol, un acide carboxylique ou une amine ou des dérivés de ces derniers.

4. Procédé selon la revendication 3, dans lequel l'alcénylétherpolyol peut être obtenu en faisant réagir un alcényléther contenant au moins un groupe 1-alcényléther et au moins un groupe fonctionnel choisi parmi -OH, -COOH, -SH, -NH₂ et les dérivés de ces derniers, avec (i) un époxyde ou (ii) un carbonate cyclique ou un dérivé de ces derniers, **caractérisé en ce que** l'alcénylétherpolyol est un alcénylétherpolyol de la formule (I) 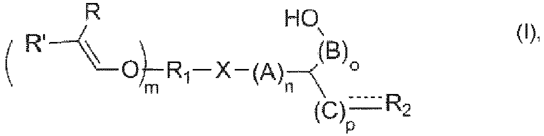 dans laquelle
R₁ est un radical organique au moins bivalent, en particulier un alkyle linéaire ou ramifié, substitué ou non substitué au moins bivalent ayant 1 à 20 atomes de carbone ou un hétéroalkyle linéaire ou ramifié, substitué ou non substitué ayant 1 à 20 atomes de carbone et au moins un atome d'oxygène ou d'azote,
R₂ est un radical organique, comportant facultativement au moins un groupe -OH et/ou 1 à 1 000 atomes de carbone, en particulier un alkyle linéaire ou ramifié, substitué ou non substitué, facultativement bivalent ou plurivalent ayant de 1 à 20 atomes de carbone, ou un hétéroalkyle linéaire ou ramifié, substitué ou non substitué ayant de 1 à 20 atomes de carbone et au moins un atome d'oxygène ou d'azote,
X est O, S, C(=O)O, OC(=O)O, C(=O)OC(=O)O, NRₓ, NRₓC(=O)O, NRₓC(=O)NRₓ ou OC(=O)NRₓ,
chaque R et R' est indépendamment choisi parmi H, alkyle C₁₋₂₀ et alcényle C₂₋₂₀, où en particulier l'un de R et R' étant H et l'autre étant alkyle C₁₋₄, ou les deux sont H,
chaque A, B et C est indépendamment choisi parmi CR"R'",
R" et R'" sont choisis indépendamment parmi H, un groupe fonctionnel, et un radical organique, en particulier H et alkyle C₁₋₂₀, ou R" et R'" collectivement ou avec l'atome de carbone auquel ils sont attachés sont un radical organique, ou deux de R" et R'" qui sont attachés à des atomes de carbone adjacents forment ensemble une liaison pour former une double liaison entre les atomes de carbone adjacents,
- - - - - - est une liaison simple ou double, où lorsqu'il s'agit d'une liaison double, l'atome de carbone lié à R₂ ne porte qu'un seul substituant R" ou R'",
m est un nombre entier allant de 1 à 10, de préférence 1,
n, p et o sont respectivement 0 ou un nombre entier allant de 1 à 10, où n+p+o=1 ou plus, en particulier 1 ou 2, et
Rₓ est H, un radical organique ou 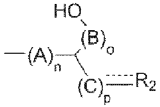
où lorsque Rₓ n'est pas 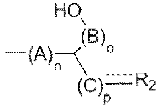 R₂ a au moins un substituant choisi parmi -OH et

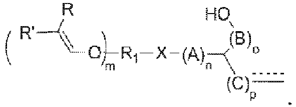

5. Procédé selon la revendication 3, dans lequel l'alcénylétherpolyol peut être obtenu en faisant réagir un alcényléther contenant au moins un groupe 1-alcényléther et au moins un groupe fonctionnel choisi parmi (i) des groupes époxyde et (ii) des groupes carbonate cycliques ou des dérivés de ces derniers, avec un alcool, un thiol, un acide carboxylique ou une amine ou des dérivés de ces derniers, **caractérisé en ce que** l'alcénylétherpolyol est un alcénylétherpolyol de la formule (V) 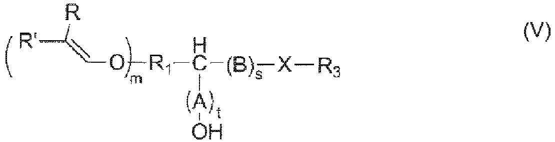 dans laquelle
R₁ est un radical organique au moins bivalent, en particulier un alkyle linéaire ou ramifié, substitué ou non substitué au moins bivalent ayant 1 à 20 atomes de carbone ou un hétéroalkyle linéaire ou ramifié, substitué ou non substitué ayant 1 à 20 atomes de carbone et au moins un atome d'oxygène ou d'azote,
R₃ est un radical organique comportant facultativement 1 à 1 000 atomes de carbone, en particulier un alkyle linéaire ou ramifié, substitué ou non substitué facultativement bivalent ou plurivalent, ayant de 1 à 20 atomes de carbone, un hétéroalkyle linéaire ou ramifié, substitué ou non substitué ayant de 1 à 20 atomes de carbone et au moins un atome d'oxygène ou d'azote, ou un (poly)alkylèneglycol de formule -O-[CHRₐCH₂O]_{b}-R_{b}, dans laquelle Rₐ est H ou un radical alkyle en C₁₋₄, R_{b} est H ou 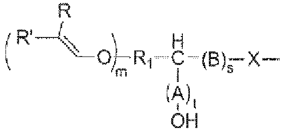
et b vaut de 1 à 100 ;
X est O, S, OC(=O), OC(=O)O, OC(=O)OC(=O), NR_{z}, NR_{z}C(=O)O, NR_{z}C(=O)NR_{z} ou OC(=O)NR_{z},
chaque R et R' est indépendamment choisi parmi H, alkyle C₁₋₂₀ et alcényle C₂₋₂₀, où en particulier l'un de R et R' étant H et l'autre étant alkyle C₁₋₄, ou les deux étant H,
chaque A et B est sélectionné indépendamment parmi CR"R'",
R" et R'" sont choisis indépendamment parmi H, un groupe fonctionnel, et un radical organique, en particulier H et alkyle C₁₋₂₀, ou R" et R'" collectivement ou avec l'atome de carbone auquel ils sont attachés sont un radical organique, ou deux de R" et R'" qui sont attachés à des atomes de carbone adjacents forment ensemble une liaison pour former une double liaison entre les atomes de carbone adjacents,
m est un nombre entier valant de 1 à 10, de préférence 1,
s et t sont respectivement 0 ou un nombre entier valant de 1 à 10, où s+t=1 ou plus, en particulier 1 ou 2, et
R_{z} est H, un radical organique ou 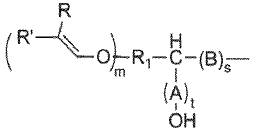
où lorsque R_{z} n'est pas 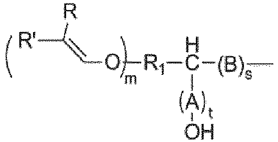
R₃ a au moins un substituant choisi parmi -OH et

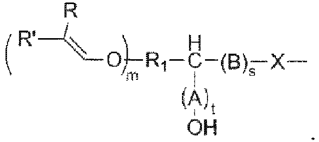

6. Procédé selon l'une des revendications 1 à 5, **caractérisé en ce que** le composé contenant les au moins deux groupes thiol est un composé dimercapto, de préférence un dimercaptoalcane facultativement substitué.

7. Procédé selon la revendication 6, **caractérisé en ce que** le composé contenant les au moins deux groupes thiol est un composé de la formule (VI)
(HS)ᵤ-R₄-SH (VI)
dans laquelle
R₄ est un radical organique au moins bivalent, en particulier un alkyle linéaire ou ramifié, substitué ou non substitué au moins bivalent ayant 1 à 20 atomes de carbone ou un hétéroalkyle linéaire ou ramifié, substitué ou non substitué ayant 1 à 20 atomes de carbone et au moins un atome d'oxygène ou d'azote ; et
u est un nombre entier valant de 1 à 10, de préférence de 1 à 5.

8. Procédé selon l'une des revendications 1 à 7, **caractérisé en ce que** le rapport molaire des groupes alcényléther sur les groupes thiol est compris dans une plage allant de 0,1 à 10, de préférence de 0,8 à 2,0.

9. Polymère contenant des groupe hydroxyle ou composé réticulé pouvant être obtenu au moyen du procédé selon l'une des revendications 1-8.

10. Polymère contenant des groupes hydroxyle, en particulier du polyhydroxyuréthane, selon la revendication 9, **caractérisé en ce que** le polymère a un poids moléculaire moyen en nombre Mₙ d'au moins 1 000 g/mol, de préférence d'au moins 2 000 g/mol, de manière davantage préférée d'au moins 4 000 g/mol.

11. Composition, en particulier composition d'agent d'adhésif, de mastic ou de revêtement, contenant un polymère contenant des groupes hydroxyle selon la revendication 9 ou 10.

12. Utilisation d'un polymère contenant des groupes hydroxyle selon la revendication 9 ou 10 en tant que composant d'une composition d'agent d'adhésif, de mastic ou de revêtement.
